# EUROPEAN PATENT APPLICATION

(11) **EP 4 498 504 A1**
(43) Date of publication of application: **29.01.2025**
(21) Application number: 22962308.7
(22) Date of filing: 17.10.2022
(51) Int. Cl.: H01M 50/531, H01M 50/543, H01M 50/533

(54) **BATTERY CELL, BATTERY, AND ELECTRICAL APPARATUS**

(71) Applicant: Contemporary Amperex Technology (Hong Kong) Limited, Central, Central And Western District (HK)
(72) Inventor: CHAI, Zhisheng, Ningde, Fujian 352100 (CN); JIN, Haizu, Ningde, Fujian 352100 (CN); JIANG, Lingyan, Ningde, Fujian 352100 (CN); SUN, Dongsheng, Ningde, Fujian 352100 (CN)
(74) Representative: Ran, Handong
(86) International application number: PCT/CN2022/125783
(87) International publication number: WO 2024/082112

(57) **Abstract**

Provided in the embodiments of the present application are a battery cell, a battery, and an electrical apparatus. The battery cell comprises a casing, an electrode terminal, an electrode assembly, and a current collecting component. The electrode terminal is arranged on the casing. The electrode assembly is accommodated in the casing, and the end of the electrode assembly facing the electrode terminal is provided with a first tab. The current collecting component is connected to the first tab. At least part of the current collecting component is located on the side of the electrode terminal facing the first tab, and abuts against and is connected to the electrode terminal.

## Description

### TECHNICAL FIELD

The application relates to the field of battery technology, and in particular to a battery cell, a battery and an electric device.

### BACKGROUND

Battery cells are widely used in electronic equipment such as mobile phones, laptop computers, electric bicycles, electric automobiles, electric aircrafts, electric ships, electric toy cars, electric toy ships, electric toy planes, and electric tools etc. Battery cells may include nickel-cadmium battery cells, nickel-hydrogen battery cells, lithium-ion battery cells, secondary alkaline zinc-manganese battery cells etc.

In development of the battery technology, how to enhance reliability of the battery cells is a development direction in the battery technology.

### SUMMARY

The application provides a battery cell, a battery and an electric device, which can enhance reliability.

In a first aspect, the embodiments of the application provide a battery cell including a housing, an electrode terminal, an electrode assembly and a current collection member. The electrode terminal is disposed on the housing. The electrode assembly is accommodated in the housing, and an end of the electrode assembly facing towards the electrode terminal is provided with a first electrode tab. The current collection member is connected to the first electrode tab, and at least a part of the current collection member is located lateral to the electrode terminal towards the first electrode tab, abuts with and is connected to the electrode terminal.

In the aforesaid technical solution, at least a part of the current collection member is arranged lateral to the electrode terminal towards the first electrode tab, so that the electrode terminal can abut with the current collection member; when the electrode assembly shakes, the electrode terminal can limit the current collection member on the side away from the electrode assembly, so as to reduce the amplitude of the current collection member shaking, reduce the risk of connection failure between the current collection member and the electrode terminal and improve the reliability of the battery cell.

In some embodiments, the current collection member abuts with and is connected to an end surface of the first electrode tab facing towards the electrode terminal.

The end surface of the first electrode tab and the electrode terminal can clamp the current collection member from two sides, so that both the first electrode tab and the electrode terminal can maintain stable contact with the current collection member, so as to reduce the shake of the current collection member when the battery cell is subjected to an external impact and improve the reliability of the battery cell.

In some embodiments, the electrode terminal has an abutting surface abutting with the current collection member, and a diameter of the abutting surface is D₁. A diameter of the current collection member is D₂, and a minimum thickness of the current collection member is t₁. D1, D2 and t₁ satisfy: t₁×D₁/D₂≤0.4.

The larger the value of t₁ is, the higher the strength of the current collection member is, and the less likely the current collection member is to deform when compressed. When a gap occurs between the electrode terminal and the current collection member due to flatness issues, if the value of t₁ is too large, the current collection member is difficult to deform under pressure due to high strength when the electrode terminal and the current collection member are pressed tightly, causing the current collection member to be difficult to closely fit to the electrode terminal, resulting in a relatively large gap between the current collection member and the electrode terminal. By reducing the value of t₁, the strength of the current collection member can be reduced, enabling the current collection member to adaptively deform under compression so as to adapt to the shape of the abutting surface.

The larger the value of D₁/D₂ is, the larger the area that the current collection member needs to fit to the electrode terminal is, and the larger the maximum gap between the electrode terminal and the current collection member is when a deviation occurs in the flatness of the current collection member. Similarly, the larger the value of D₁/D₂ is, the more difficult it is to reduce the gap by pressing the electrode terminal and the current collection member tightly. By reducing the value of D₁/D₂, it is possible to reduce the area that needs to fit between the current collection member and the electrode terminal, reduce the gap between the electrode terminal and the current collection member, and reduce the difficulty of pressing the current collection member and the electrode terminal tightly.

By limiting the value of t₁×D₁/D₂ to be less than or equal to 0.4, the aforesaid technical solution can reduce the gap between the current collection member and the electrode terminal and improve the connection strength between the current collection member and the electrode terminal.

In some embodiments, D₁, D₂ and t₁ satisfy: 0.05≤t₁×D₁/D₂≤0.3.

The aforesaid technical solution can better reduce the gap between the current collection member and the electrode terminal and improve the connection strength between the current collection member and the electrode terminal. When t₁×D₁/D₂≥0.05, it is possible to improve the overcurrent capacity between the current collection member and the electrode terminal, reduce heat generation, and improve the reliability and safety of the battery cell.

In some embodiments, t₁ is 0.1mm-1mm.

The larger the value of t₁ is, the higher the strength of the current collection member is, and the less likely the current collection member is to deform when compressed. When a gap occurs between the electrode terminal and the current collection member due to flatness issues, if the value of t₁ is too large, the current collection member is difficult to deform under pressure due to high strength when the electrode terminal and the current collection member are pressed tightly, causing the current collection member to be difficult to closely fit to the electrode terminal, resulting in a relatively large gap between the current collection member and the electrode terminal. The smaller the value of t₁ is, the smaller the overcurrent area of the current collection member is, and the lower the overcurrent capacity of the current collection member is. If the value of t₁ is too small, it may cause an excessive heat generated in the current collection member, affecting the reliability and safety of the battery cell.

By limiting t₁ to 0.1mm-1mm, the aforesaid technical solution improves the overcurrent capacity of the current collection member, reduces the gap between the current collection member and the electrode terminal, and improves the connection strength between the current collection member and the electrode terminal.

In some embodiments, t₁ is 0.2mm-0.6mm.

The aforesaid technical solution can further improve the overcurrent capacity of the current collection member, reduce the gap between the current collection member and the electrode terminal, and enhance the connection strength between the current collection member and the electrode terminal.

In some embodiments, in a thickness direction of the current collection member, a surface of the electrode terminal closest to the electrode assembly abuts with the current collection member.

During the process of the electrode assembly and the current collection member entering the housing, the current collection member abuts with the surface of the electrode terminal closest to the electrode assembly at first, and in this way it is possible to shorten the stroke of the current collection member entering the housing and improve assembly efficiency.

In some embodiments, the electrode terminal includes a limit portion and a first projection, and the limit portion is accommodated in the housing. In the thickness direction of the current collection member, the limit portion overlaps at least partially with the housing, and a top end surface of the first projection is closer to the electrode assembly than the limit portion. The top end surface of the first projection abuts with the current collection member.

In the aforesaid technical solution, the limit portion may be limited by the housing so as to reduce the risk of the electrode terminal penetrating out of the housing and improve the reliability of the battery cell. The top end surface of the first projection protrudes from the limit portion, so as to form a clearance between the limit portion and the current collection member, reduce the fitted area between the current collection member and the electrode terminal, thereby reducing the gap between the current collection member and the first projection and improving the connection strength between the current collection member and the electrode terminal.

In some embodiments, in the thickness direction of the current collection member, a dimension t₂ of the first projection protruding from the limit portion is 0.05mm-0.35mm.

The smaller t₂ is, the higher the risk of compression between the current collection member and the limit portion is; if t₂ is too small, the limit portion may affect the abutting between the top end surface of the first projection and the current collection member. The larger t₂ is, the larger the space occupied by the electrode terminal is, and the lower the utilization rate of space inside the battery cell is. The aforesaid technical solution limits the value of t₂ to 0.05mm-0.35mm, which can reduce the risk of the limit portion abutting with the current collection member, reduce the gap between the current collection member and the top end surface of the first projection, and reduce the loss of space utilization rate of the battery cell.

In some embodiments, t₂ is 0.15mm-0.25mm.

The aforesaid technical solution can further reduce the risk of the limit portion abutting with the current collection member, reduce the gap between the current collection member and the top end surface of the first projection, and reduce the loss of space utilization rate of the battery cell.

In some embodiments, a region of the electrode terminal corresponding to the top end surface of the first projection is welded to the current collection member and forms a first welding portion.

In the aforesaid technical solution, the top end surface of the first projection abuts directly with the current collection member, and a gap therebetween is relatively small. By welding the region of the electrode terminal corresponding to the top end surface of the first projection to the current collection member, it is possible to reduce the risk of virtual welding and improve welding strength.

In some embodiments, the first welding portion is circular ring-shaped, an outer diameter of the first welding portion is D₃, a diameter of the top end surface of the first projection is D₄, and D₃ is less than D₄.

During welding, there may be errors in the welding device, resulting in a fluctuation in the welding position. If D₃ is equal to D₄, when the welding position fluctuates, welding may occur out of the top end surface of the first projection, resulting in the risk of virtual welding. The aforesaid technical solution makes D₃ less than D₄, so as to absorb welding errors, reduce the risk of virtual welding and improve welding strength.

In some embodiments, the electrode terminal is provided with a first recess on a side away from the first electrode tab, a portion between a bottom surface of the first recess and the top end surface of the first projection forms a connection portion, and the connection portion is welded to the current collection member and forms the first welding portion.

In the aforesaid technical solution, the thickness of the connection portion is reduced by disposing the first recess in the electrode terminal, so as to reduce the welding power required for welding the connection portion to the current collection member, reduce heat generation, reduce the risk of other components being burned, and improve safety.

In some embodiments, a diameter of the bottom surface of the first recess is D₅, a diameter of the top end surface of the first projection is D₄, and D₅ is less than D₄.

Disposing the first recess may reduce the thickness of the region of the electrode terminal facing towards the bottom surface of the first recess, and the first projection may increase the thickness of the region of the electrode terminal facing towards the top end surface of the first projection. When the thickness of the connection portion is constant, if D₅ is greater than or equal to D₄, due to process errors, some local regions of the bottom surface of the first recess may be unable to face towards the top end surface of the first projection, resulting in a local thickness of the electrode terminal being less than the thickness of the connection portion, leading to a lower local strength of the electrode terminal, so that the electrode terminal may fracture when the battery cell is subjected to an external impact. The aforesaid technical solution makes D₅ less than D₄ so as to reduce the impact of the first recess on the strength of the electrode terminal, reduce the risk of the electrode terminal fracturing, and improve the reliability of the battery cell.

In some embodiments, in the thickness direction of the current collection member, the entire first projection is closer to the electrode assembly than the limit portion.

In some embodiments, the electrode terminal is provided with an annular recess on a side facing towards the electrode assembly, and the annular recess is arranged to encircle the first projection. The annular recess is recessed relative to a surface of the limit portion facing towards the electrode assembly, and separates at least a part of the limit portion from the first projection.

In the aforesaid technical solution, the annular recess can separate at least a part of the limit portion from the first projection, so as to reduce the acting force transmitted to the limit portion when the first projection is compressed and reduce the risk of deformation of the limit portion.

In some embodiments, the current collection member is welded to the first electrode tab and forms a second welding portion. In the thickness direction of the current collection member, the second welding portion does not overlap with the top end surface of the first projection.

In the aforesaid technical solution, the second welding portion and the top end surface of the first projection do not overlap in the thickness direction, thereby reducing the risk of the top end surface of the first projection abutting with the second welding portion, reducing the gap between the top end surface of the first projection and the current collection member, and improving welding strength.

In some embodiments, at least a part of the second welding portion is located lateral to the electrode terminal towards the first electrode tab and is arranged to be spaced apart from the electrode terminal.

In the aforesaid technical solution, by arranging the second welding portion spaced apart from the electrode terminal, it is possible to reduce the risk of the second welding portion obstructing the electrode terminal abutting with the current collection member and to reduce over positioning. The second welding portion may extend to the region of the first electrode tab opposite to the electrode terminal in the thickness direction, so as to improve overcurrent capacity.

In some embodiments, the diameter of the current collection member is D₂, the diameter of the top end surface of the first projection is D₄, and D₄/D₂≤0.4.

The larger the value of D₄/D₂ is, the larger the area that the current collection member needs to fit to the top end surface of the first projection is, and the larger the maximum gap between the top end surface of the first projection and the current collection member is when a deviation occurs in the flatness of the current collection member. Similarly, the larger the value of D₄/D₂ is, the more difficult it is to reduce the gap by pressing the electrode terminal and the current collection member tightly. When D₄/D₂≤0.4, the aforesaid technical solution can reduce the gap between the current collection member and the first projection, and improve the connection strength between the current collection member and the first projection.

In some embodiments, the current collection member includes a current collection body and a second projection, the current collection body is connected to the first electrode tab, the second projection protrudes from a surface of the current collection body facing towards the electrode terminal, and a top end surface of the second projection abuts with the electrode terminal; the current collection body is arranged to be spaced apart from the electrode terminal.

In the aforesaid technical solution, by disposing the second projection in the current collection member, it is possible to form a clearance between the current collection body and the electrode terminal, reduce the fitted area between the current collection member and the electrode terminal, thereby reducing the gap between the second projection and the current collection member and improving the connection strength between the current collection member and the electrode terminal.

In some embodiments, in the thickness direction of the current collection member, a dimension t₃ of the second projection protruding from the current collection body is 0.05mm-0.25mm.

The smaller t₃ is, the higher the risk of the current collection body abutting with the electrode terminal is; if t₃ is too small, the current collection body may affect the abutting between the top end surface of the second projection and the electrode terminal. The larger t₃ is, the larger the space occupied by the current collection member is, and the lower the utilization rate of space inside the battery cell is. The aforesaid technical solution limits the value of t₃ to 0.05mm-0.25mm, which can reduce the risk of the current collection body abutting with the electrode terminal, reduce the gap between the electrode terminal and the top end surface of the second projection, and reduce the loss of space utilization rate of the battery cell.

In some embodiments, t₃ is 0.1mm-0.2mm.

The aforesaid technical solution can further reduce the risk of the current collection body abutting with the electrode terminal, reduce the gap between the electrode terminal and the top end surface of the second projection, and reduce the loss of space utilization rate of the battery cell.

In some embodiments, a region of the current collection body surrounding outside the second projection is welded to the first electrode tab. During welding, the second projection will not obstruct the region of the current collection body surrounding outside the second projection, and in this way it is possible to reduce welding difficulty and reduce welding power.

In some embodiments, a diameter of the current collection member is D₂, a diameter of the top end surface of the second projection is L, and L/D₂≤0.4.

The larger the value of L/D₂ is, the larger the area that the electrode terminal needs to fit to the top end surface of the second projection is, and the larger the maximum gap between the top end surface of the second projection and the electrode terminal is when a deviation occurs in the flatness of the current collection member. Similarly, the larger the value of L/D₂ is, the more difficult it is to reduce the gap by pressing the electrode terminal and the current collection member tightly. When L/D₂≤0.4, the aforesaid technical solution can reduce the gap between the electrode terminal and the second projection, and improve the connection strength between the electrode terminal and the second projection.

In some embodiments, the electrode terminal includes a first projection, and a top end surface of the first projection abuts with the top end surface of the second projection.

The aforesaid technical solution disposes the first and second projections at the same time, so as to further reduce the fitted area between the current collection member and the electrode terminal, thereby reducing the gap between the first projection and the second projection and improving the connection strength between the current collection member and the electrode terminal.

In some embodiments, the electrode terminal is provided with a second recess on a side facing towards the current collection member. At least a part of the second projection is accommodated in the second recess, and a top end surface of the second projection abuts with a bottom surface of the second recess.

In the aforesaid technical solution, the second recess can position the second projection, thereby simplifying the assembly process of the electrode terminal and the current collection member and improving assembly efficiency.

In some embodiments, the current collection member further includes a third projection, and the third projection protrudes from a surface of the current collection body facing towards the first electrode tab.

When assembling the electrode assembly and the current collection member, the third projection may be embedded into the first electrode tab by pressing the first electrode tab, thereby improving the contact stability between the first electrode tab and the current collection member.

In some embodiments, the third projection and the second projection are symmetrical with respect to the current collection body.

The aforesaid technical solution can achieve anti-fooling, and there is no need to judge the positive or negative direction of the current collection member when assembling the electrode assembly and the current collection member, thereby improving assembly efficiency.

In some embodiments, the current collection member is provided with a third recess at a position corresponding to the second projection, and the third recess is recessed relative to a surface of the current collection body facing towards the first electrode tab. The third recess can reduce the space occupied by the current collection member and reduce the weight of the current collection member.

In some embodiments, the electrode terminal is welded to the current collection member. A melting point of the electrode terminal is T₁, a melting point of the current collection member is T₂, and T₁/T₂ is 0.8-1.1.

The aforesaid technical solution can reduce the difference between the melting point of the electrode terminal and the melting point of the current collection member, improve welding process, and enhance welding strength.

In some embodiments, the electrode terminal includes a first recess and a connection portion located at a bottom of the first recess. The current collection member is welded to the connection portion and forms a first welding portion, and in the thickness direction of the current collection member, the first welding portion extends from a side of the connection portion away from the current collection member to at least an interior of the current collection member.

In the aforesaid technical solution, the thickness of the connection portion is reduced by disposing the first recess in the electrode terminal, so as to reduce the welding power required for welding the connection portion to the current collection member, reduce heat generation, reduce the risk of other components being burned, and improve safety. The first welding portion extends from the connection portion into the interior of the current collection member so as to connect the current collection member and the connection portion, reducing the contact resistance between the current collection member and the electrode terminal and improving overcurrent capacity.

In some embodiments, the housing includes a cannular body and a cap body connected to the cannular body, the cannular body is arranged to encircle an outer periphery of the electrode assembly, the cap body is provided with an electrode export hole, and the electrode terminal is mounted in the electrode export hole. The first welding portion and the cap body are both circular ring-shaped, an outer diameter of the cap body is D₆, and an inner diameter of the first welding portion is D₇. D₆ and D₇ satisfy: 0.1≤D₇/D₆≤0.6.

D₆ is positively correlated with the diameter of the electrode assembly. The larger D₆ is, the higher the capacity of the electrode assembly is, and the higher the requirement of the battery cell for the overcurrent area of the first welding portion is. The smaller D₇ is, the smaller the perimeter of the first welding portion is, and the smaller the overcurrent area of the first welding portion is. If D₇/D₆ is too small, due to D₆ being relatively large and D₇ being relatively small, it will result in insufficient overcurrent area of the first welding portion, and the first welding portion will generate a large amount of heat during charging and discharging, making it difficult to meet the requirement of the battery cell for overcurrent capacity and temperature rise during fast charging. The aforesaid technical solution limits D₇/D₆ to be greater than or equal to 0.1, which can better meet the requirement of the battery cell for overcurrent capacity and temperature rise.

The larger D₇ is, the larger the dimension of the electrode export hole is, and the smaller the area of the cap body is. Similarly, the smaller D₆ is, the smaller the area of the cap body is. If D₇/D₆ is too large, due to D₆ being relatively small and D₇ being relatively large, it will cause the cap body to deform easily when the battery cell vibrates, posing a safety hazard. The cap body may serve as an output electrode of the battery cell to be connected to a bus member. If D₇/D₆ is too large, it will cause the connection area between the cap body and the bus member to be relatively small, the overcurrent area between the cap body and the bus member to be insufficient, and the heat generated at the connection between the cap body and the bus member to be relatively high, making it difficult to meet the requirement of the battery cell for overcurrent capacity and temperature rise during fast charging. The aforesaid technical solution limits D₇/D₆ to be less than or equal to 0.6, which can meet the requirement of the battery cell for overcurrent capacity and temperature rise, and improve the safety of battery cells

In some embodiments, 0.2≤D₇/D₆≤0.4. When 0.2≤D₇/D₆≤0.4, it is possible to better meet the requirements of battery cells for overcurrent capacity and temperature rise, and improve the safety of battery cells.

In some embodiments, D₇ is 5mm-14mm.

If D₇ is too small, it will result in insufficient overcurrent area of the first welding portion, and the first welding portion will generate a large amount of heat during charging and discharging, making it difficult to meet the requirements of the battery cell for overcurrent capacity and temperature rise during fast charging. If D₇ is too large, it will result in insufficient overcurrent area between the cap body and the bus member and a relatively high heat generated at the connection between the cap body and the bus member. The aforesaid technical solution limits D₇ to 5mm-14mm, which can meet the requirement of the battery cell for overcurrent capacity and temperature rise.

In some embodiments, the cap body and the cannular body is of an integrally formed structure, and in this way it is possible to save the connection process between the cap body and the cannular body.

The cap body may be used to be connected to an external component. When the battery cell is subjected to an external impact, the external component may pull the cap body, causing the connection between the cap body and the cannular body to be subjected to a force. The aforesaid technical solution integrates the cap body and the cannular body so as to improve the strength of the connection between the cap body and the cannular body, and reduce the risk of connection failure between the cap body and the cannular body.

In some embodiments, in the thickness direction of the current collection member, a dimension of the first welding portion is h, and a thickness of the connection portion is D₈. D₈ and h satisfy: 1 <h/D₈≤1.5.

If h/D₈≤1, the fusion depth of the first welding portion is relatively small, and the entire first welding portion is formed in the connection portion, resulting in virtual welding, and the first welding portion is difficult to effectively connect the current collection member and the connection portion. When D₈ is constant, the larger h is, the greater the power required for welding is, and the higher the heat generation during the welding process is. If h is too large, the high temperature generated by welding may easily damage the components around the electrode terminal, causing a safety hazard. In the aforesaid technical solution, when 1 <h/D₈≤1.5, it is possible to improve the connection strength between the current collection member and the connection portion, reduce welding heat generation, and reduce welding difficulty.

In some embodiments, a thickness of a region of the current collection member for being welded to the connection portion is D₉, and D₈ and D₉ satisfy: 0.5≤D₉/D₈≤1.2.

When D₈ is constant, the smaller D₉ is, the easier it is for the current collection member to be melted through during the welding process, and the easier it is for the high temperature particles generated by welding to fall into the battery cell; the larger D₉ is, the greater the space occupied by and weight of the current collection member is, and the lower the energy density of the battery cell is. In the aforesaid technical solution, when 0.5≤D₉/D₈≤1.2, it is possible to reduce the risk of melting through the current collection member and reduce the energy density loss of the battery cell.

In some embodiments, D₈ is 0.4mm-1.2mm.

The smaller D₈ is, the lower the overcurrent capacity of the connection portion is. If D₈ is too small, it may be difficult for the connection portion to meet the requirement of the battery cell for overcurrent capacity and temperature rise during fast charging. The larger D₈ is, the greater the power required for welding is, and the higher the heat generation during the welding process is. If D₈ is too large, the high temperature generated by welding may easily damage the components around the electrode terminal, causing a safety hazard. The aforesaid technical solution limits D₈ to 0.4mm-1.2mm, which can meet the requirement of the battery cell for overcurrent capacity and temperature rise, reduce welding heat generation, and improve safety..

In some embodiments, the current collection member is welded to the first electrode tab and forms a second welding portion. The first electrode tab is arranged to encircle a central axis of the electrode assembly, and a cross section of the first electrode tab perpendicular to the central axis is circular ring-shaped. An outer radius of the first electrode tab is R, a minimum spacing between the second welding portion and the central axis in a radial direction of the first electrode tab is D₁₀, and D₁₀ and R satisfy: 0.2≤D₁₀/R≤0.8.

R is positively correlated with the diameter of the electrode assembly. The larger R is, the larger the electric current generated by the electrode assembly is, and the higher the requirement of the battery cell for overcurrent area is. The portion of the current collection member close to the central axis may be used to be welded to the connection portion; the smaller D₁₀ is, the smaller the region of the current collection member which can be welded to the connection portion is, and the smaller the overcurrent area between the current collection member and the connection portion is. If D₁₀/R is too small, due to D₁₀ being too relatively and R being relatively large, it will result in insufficient overcurrent area between the current collection member and the connection portion, and a large amount of heat will generate at where the current collection member and the connection portion are welded during charging and discharging, making it difficult to meet the requirement of the battery cell for overcurrent capacity and temperature rise during fast charging. The aforesaid technical solution makes D₁₀/R≥0.2, so as to meet the requirement of the battery cell for overcurrent capacity and temperature rise.

The first electrode tab usually includes a plurality of electrode tab layers. The larger D₁₀ is, the farther outward the electrode tab layer directly connected to the second welding portion is located. If D₁₀ is too large, it will cause the amount of the electrode tab layers connected by the second welding portion to be relatively small and the spacing between the second welding portion and the innermost electrode tab layer to be too large, resulting in a relatively large difference between the current path between the outermost electrode tab layer and the electrode terminal and the current path between the innermost electrode tab layer and the electrode terminal, leading to an uneven current density of the first electrode sheet of the electrode assembly and an increased internal resistance. The aforesaid technical solution makes D₁₀/R≤0.8, so as to reduce the difference in current paths between different positions of the first electrode tab and the electrode terminal, improve the uniformity of current density of the first electrode sheet of the electrode assembly, reduce internal resistance, and improve overcurrent capacity.

In some embodiments, D₁₀ and R satisfy: 0.2≤D₁₀/R≤0.5.

The aforesaid technical solution can better improve the overcurrent capacity of the battery cell and reduce the temperature rise of the battery cell.

In some embodiments, D₁₀ is 3.5mm-10mm.

If D₁₀ is too small, it will result in insufficient overcurrent area between the current collection member and the connection portion, and a large amount of heat will generate at where the current collection member and the connection portion are welded during charging and discharging, making it difficult to meet the requirement of the battery cell for overcurrent capacity and temperature rise during fast charging. The aforesaid technical solution makes D₁₀≥3.5mm, which can meet the requirement of the battery cell for overcurrent capacity and temperature rise.

If D₁₀ is too large, it will cause the amount of the electrode tab layers connected by the second welding portion to be relatively small, and the spacing between the electrode tab layer close to the central axis and the second welding portion will be too large, resulting in a high internal resistance of the electrode assembly and affecting the performance of the battery cell. The aforesaid technical solution makes D₁₀≤10mm, which can reduce the internal resistance of the electrode assembly and improve the charging and discharging performance of the battery cell.

In some embodiments, a diameter of the current collection member is D₂, a diameter of the first electrode tab is D₁₁, and D₂ is less than D₁₁. The current collection member has a relatively small diameter, which can save the space occupied by and the weight of the current collection member, and improve the energy density of the battery cell.

In some embodiments, D₂ and D₁₁ satisfy: 0.75≤D₂/D₁₁≤0.97.

When D₁₁ is constant, if D₂ is too small, then the distance between the outer portion of the first electrode tab and the current collection member is too large, and the conductive path between the outer portion of the first electrode tab and the current collection member is too long, resulting in a relatively high internal resistance of the electrode assembly and affecting the performance of the battery cell. The aforesaid technical solution makes D₂/D₁₁≥0.75, which can reduce the internal resistance of the electrode assembly and improve the charging and discharging performance of the battery cell.

When D₁₁ is constant, if D₂ is too large, due to assembly errors, the coaxiality between the current collection member and the electrode assembly will fluctuate, causing the current collection member to protrude from the outer peripheral surface of the electrode assembly, making it difficult for the current collection member and the electrode assembly to enter the housing, affecting assembly efficiency and product yield. The aforesaid technical solution makes D₂/D₁₁≤0.97, which can reduce the risk of the current collection member protruding from the outer peripheral surface of the electrode assembly due to errors and improve assembly efficiency and product yield.

In some embodiments, D₂ is 35mm-44mm.

The aforesaid technical solution limits D₂ to 35mm-44mm so as to reduce the internal resistance of the electrode assembly, improve the charging and discharging performance of the battery cell, and reduce the risk of the current collection member protruding from the outer periphery surface of the electrode assembly due to errors.

In a second aspect, the embodiments of the application provide a battery including a plurality of battery cells provided by any embodiment of the first aspect.

In a third aspect, the embodiments of the application provide an electric device including the battery provided in the second aspect used to provide electrical energy.

### BRIEF DESCRIPTION OF THE DRAWINGS

In order to illustrate the technical solutions in embodiments of the application more clearly, the drawings to be used in the embodiments of the application will be briefly described below. Obviously, the drawings described below are merely some embodiments of the application, and it is also possible for a person of ordinary skill in the art to obtain further drawings from these drawings without creative work.
Fig. 1 is a schematic structural view of a vehicle provided by some embodiments of the application;
Fig. 2 is a schematic explosive view of a battery provided by some embodiments of the application;
Fig. 3 is a schematic structural view of the battery module as shown in Fig. 2;
Fig. 4 is a schematic explosive view of a battery cell provided by some embodiments of the application;
Fig. 5 is a schematic sectional view of a battery cell provided by some embodiments of the application;
Fig. 6 is a schematic partial enlarged view of the battery cell as shown in Fig. 5;
Fig. 7 is a schematic enlarged view at the box B of Fig. 6;
Fig. 8 is a schematic enlarged view at the circle C of Fig. 7;
Fig. 9 is a schematic structural view of an electrode assembly and a current collection member of a battery cell provided by some embodiments of the application;
Fig. 10 is a schematic partial sectional view of a battery cell provided by some further embodiments of the application;
Fig. 11 is a schematic sectional view of the electrode terminal as shown in Fig. 10;
Fig. 12 is a schematic sectional view of the current collection member as shown in Fig. 10;
Fig. 13 is a schematic enlarged view at the circle E of Fig. 12;
Fig. 14 is a schematic partial sectional view of a battery cell provided by some further embodiments of the application;
Fig. 15 is a schematic sectional view of the electrode terminal as shown in Fig. 14;
Fig. 16 is a schematic sectional view of the current collection member as shown in Fig. 14;
Fig. 17 is a schematic partial sectional view of a battery cell provided by some further embodiments of the application;
Fig. 18 is a schematic enlarged view at the box F of Fig. 17;
Fig. 19 is a schematic sectional view of a battery cell provided by some further embodiments of the application.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

In the application, the term "parallel" includes not only the case of being absolutely parallel, but also the case of being approximately parallel as conventionally understood in engineering; at the same time, "vertical" also includes not only the case of being absolutely vertical, but also the case of being approximately vertical as conventionally understood in engineering.

In the application, the battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited by the embodiments of the application.

The battery mentioned in the embodiments of the application refers to a single physical module including one or more battery cells to provide higher voltage and capacity. For example, the battery mentioned in the application may include a battery module or a battery pack or the like. The battery generally includes a case for packaging one or more battery cells. The case can prevent liquid or other foreign matter from affecting the charging or discharging of the battery cell.

The battery cell includes an electrode assembly and electrolyte solution, and the electrode includes a positive electrode sheet, a negative electrode sheet, and a separator. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode current collecting portion and a positive electrode tab. The positive electrode current collecting portion is coated with the positive electrode active material layer, and the positive electrode tab is not coated with the positive electrode active material layer. Taking a lithium ion battery as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode current collecting portion and a negative electrode tab. The negative electrode current collecting portion is coated with the negative electrode active material layer, and the negative electrode tab is not coated with the negative electrode active material layer. The material of the negative electrode current collector may be copper, the negative electrode active material layer includes a negative electrode active material, and the negative electrode active material may be carbon, silicon, or the like. The material of the separator may be PP (polypropylene) or PE (polyethylene) or the like.

The battery cell also includes a housing for accommodating the electrode assembly and an electrode terminal disposed on the housing to be electrically connected to the electrode assembly so as to achieve charging and discharging of the electrode assembly. In order to facilitate assembly and ensure the overcurrent capacity of the battery cell, the battery cell is usually connected to the electrode tab and electrode terminal of the electrode assembly by a current collection member.

When the battery cell is subjected to an external impact, the electrode assembly may shake up and down inside the housing. The inventors notice that when the electrode assembly upon shaking will also pull the current collection member, causing deformation of the current collection member and posing a risk of connection failure between the current collection member and the electrode terminal.

In view of this, the embodiments of the application provide a technical solution, in which at least a part of the current collection member is arranged lateral to the electrode terminal towards the electrode tab, so that the electrode terminal can abut with the current collection member; when the electrode assembly shakes, the electrode terminal can limit the current collection member on the side away from the electrode assembly, so as to reduce the amplitude of the current collection member shaking, reduce the risk of connection failure between the current collection member and the electrode terminal and improve the reliability of the battery cell.

The technical solutions described in the embodiments of the application are applicable to batteries and electric devices employing batteries.

The electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc. The embodiments of the application have no particular limitation to the above electric device.

For ease of description, the following embodiments take a vehicle as an example of the electric device for explanation.

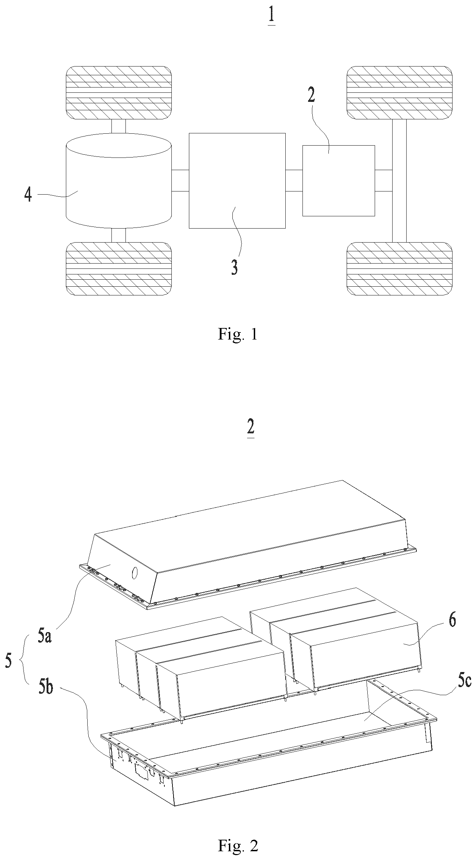

Fig. 1 is a schematic structural view of a vehicle provided by some embodiments of the application. As shown in Fig. 1, a battery 2 is provided inside the vehicle 1, and the battery 2 may be disposed at a bottom or a head or a rear of the vehicle 1. The battery 2 may be used for powering the vehicle 1. For example, the battery 2 may serve as an operational power source for the vehicle 1.

The vehicle 1 may also include a controller 3 and a motor 4. The controller 3 is used for controlling the battery 2 to power the motor 4, for example, for operational power requirements during start-up, navigation and traveling of the vehicle 1.

In some embodiments of the application, the battery 2 may serve not only as an operational power source for the vehicle 1, but also as a drive power source for the vehicle 1 to provide a drive power for the vehicle 1 instead of or partially instead of fuel or natural gas.

Fig. 2 is a schematic explosive view of a battery provided by some embodiments of the application. As shown in Fig. 2, the battery 2 includes a case 5 and a battery cell (not shown in Fig. 2), and the battery cell is accommodated in the case 5.

The case 5 is used for accommodating the battery cell, and the case 5 may have various structures. In some embodiments, the case 5 may include a first case portion 5a and a second case portion 5b capped by each other. The first case portion 5a and the second case portion 5b together define an accommodation space 5c for accommodating the battery cell. The second case portion 5b may be of a hollow structure with one end open, the first case portion 5a is of a plate-like structure, and the first case portion 5a is capped to the open side of the second case portion 5b to form the case 5 with the accommodation space 5c. Also, each of the first case portion 5a and the second case portion 5b may be of a hollow structure with one side open, and the open side of the first case portion 5a is capped to the open side of the second case portion 5b to form the case 5 with the accommodation space 5c. Of course, the first case portion 5a and the second case portion 5b may have various shapes, such as a cylinder, a cuboid and the like.

In order to increase the seal property after the first case portion 5a and the second case portion 5b are connected, a seal member, such as seal glue or a seal ring, may be provided between the first case portion 5a and the second case portion 5b.

If the first case portion 5a is capped on the top of the second case portion 5b, the first case portion 5a may also be referred to as an upper case cover, and the second case portion 5b may also be referred to as a lower case body.

In the battery 2, the amount of battery cell may be single or plural. If there are a plurality of battery cells, the plurality of battery cells may be connected in series or in parallel or in a mixed manner, wherein the mixed manner means that the plurality of battery cells are connected both in series and in parallel. The plurality of battery cells may be directly connected together in series or in parallel or in the mixed manner, and the entirety constituted by the plurality of battery cells is accommodated in the case 5. Of course, the plurality of battery cells may also be connected in series or in parallel or in the mixed manner to form battery modules 6 at first, and then a plurality of battery modules 6 may be connected in series or in parallel or in the mixed manner to form an entirety and be accommodated in the case 5.

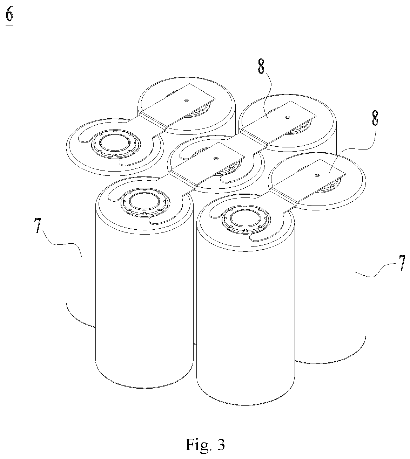

Fig. 3 is a schematic structural view of the battery module as shown in Fig. 2.

In some embodiments, as shown in Fig. 3, there are a plurality of battery cells 7, and the plurality of battery cells 7 are connected in series or in parallel or in the mixed manner to form battery modules 6 at first. Then a plurality of battery modules 6 are connected in series or in parallel or in the mixed manner to form an entirety and are accommodated in the case.

The plurality of battery cells 7 in a battery module 6 may be electrically connected by a bus member 8 to achieve a parallel or series or mixed connection of the plurality of battery cells 7 in the battery module 6. There may be one or more bus members, and each of the bus members 8 is used to electrically connect at least two battery cells.

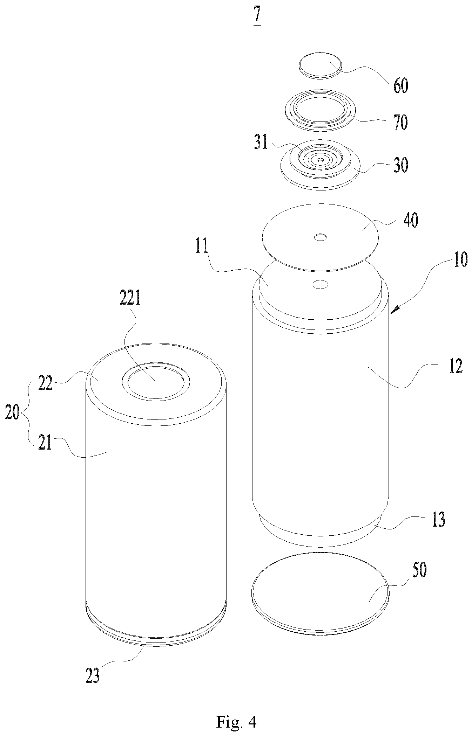

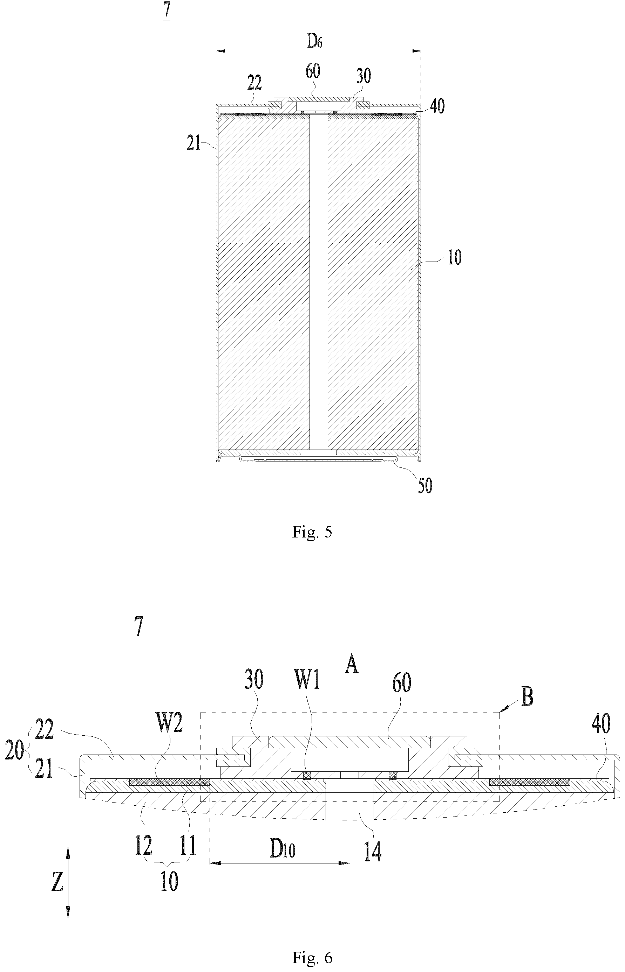

Fig. 4 is a schematic explosive view of a battery cell provided by some embodiments of the application; Fig. 5 is a schematic sectional view of a battery cell provided by some embodiments of the application; Fig. 6 is a schematic partial enlarged view of the battery cell as shown in Fig. 5.

As shown in Figs. 4-6, the embodiments of the application provide a battery cell 7 including a housing 20, an electrode terminal 30, an electrode assembly 10 and a current collection member 40. The electrode terminal 30 is disposed on the housing 20. The electrode assembly 10 is accommodated in the housing 20, and an end of the electrode assembly 10 facing towards the electrode terminal 30 is provided with a first electrode tab 11. The current collection member 40 is connected to the first electrode tab 11. At least a part of the current collection member 40 is located lateral to the electrode terminal 30 towards the first electrode tab 11, abuts with and is connected to the electrode terminal 30.

The electrode assembly 10 includes a first electrode sheet and a second electrode sheet with opposite polarities. One of the first and second electrode sheets is a positive electrode sheet, and the other is a negative electrode sheet. For example, the electrode assembly 10 generates electrical energy through oxidation and reduction reactions during the insertion/extraction of ions in the positive and negative electrode sheets. Optionally, the electrode assembly 10 further includes a separator used to insulate the first electrode sheet from the second electrode sheet.

In some examples, each of the first electrode sheet, the second electrode sheet, and the separator is of a strip structure, and the first electrode sheet, the second electrode sheet and the separator are wound around a central axis A as an entirety and form a wound structure. The wound structure may be a cylindrical, flat, or other shaped structure. In other examples, the electrode assembly 10 may also be of a stacked structure formed by stacking up the first electrode sheet, the separator and the second electrode sheet.

The first electrode tab 11 may be a portion of the first electrode sheet coated with no active material layer. The first electrode tab 11 may be a positive electrode tab or a negative electrode tab.

The housing 20 is of a hollow structure in which a space for accommodating the electrode assembly 10 is formed. The housing 20 may be of various shapes such as a cuboid, a cylinder and hexagonal prisms and be of various dimensions. The shape of the housing body 20 may be determined according to a specific shape of the electrode assembly 10. For example, if the electrode assembly 10 is of a cylindrical structure, the housing may be selected to be cylindrical, and if the electrode assembly 10 is of a cuboid structure, the housing may be selected to be cuboid. Optionally, both electrode assembly 10 and housing 20 are cylinders.

The housing 20 may be of various materials, such as copper, iron, aluminum, stainless steel, aluminum alloy and the like, on which the embodiments of the application make no specific limitations.

The housing 20 may be positively charged, negatively charged, or uncharged.

The electrode terminal 30 may serve as an output electrode of the battery cell 7, which can electrically connect the battery cell 7 to an external circuit so as to achieve the charging and discharging of the battery cell 7. Optionally, the electrode terminal 30 is used to be connected to a bus member to achieve electrical connection between battery cells 7.

The electrode terminal 30 may be disposed on the housing 20 in an insulating manner, or may be electrically connected to the housing 20, which is not limited in the embodiments of the application, as long as the positive and negative electrode sheets are avoided from being conducted.

The current collection member 40 electrically connects the first electrode tab 11 to the electrode terminal 30. The embodiments of the application do not limit the connection manner between the first electrode tab 11 and the current collection member 40. For example, the current collection member 40 may be connected to the first electrode tab 11 in a way of welding, abutting or bonding and the like.

The embodiments of the application do not limit the connection manner between the current collection member 40 and the electrode terminal 30. For example, the current collection member 40 may be connected to the electrode terminal 30 in a way of welding, abutting or bonding and the like.

At least a part of the current collection member 40 is located between the first electrode tab 11 and the electrode terminal 30. The current collection member 40 may be located between the first electrode tab 11 and the electrode terminal 30 in its entirety, or may be only partially located between the first electrode tab 11 and the electrode terminal 30.

In the embodiments of the application, at least a part of the current collection member 40 is arranged lateral to the electrode terminal 30 towards the first electrode tab 11, so that the electrode terminal 30 can abut with the current collection member 40; when the electrode assembly 10 shakes, the electrode terminal 30 can limit the current collection member 40 on the side away from the electrode assembly 10, so as to reduce the amplitude of the current collection member 40 shaking, reduce the risk of connection failure between the current collection member 40 and the electrode terminal 30 and improve the reliability of the battery cell 7.

In some embodiments, the electrode assembly 10 includes a body portion 12, a first electrode tab 11 and a second electrode tab 13, and the first electrode tab 11 and the second electrode tab 13 protrude from the body portion 12. For example, the first electrode tab 11 is a portion of the first electrode sheet coated with no active material layer, and the second electrode tab 13 is a portion of the second electrode sheet coated with no active material layer.

The first electrode tab 11 and the second electrode tab 13 may extend from the same side of the body portion 12, or may extend from opposite sides respectively. For example, the first electrode tab 11 is located at an end of the electrode assembly 10 facing towards the electrode terminal 30, and the second electrode tab 13 is located at an end of the electrode assembly 10 away from the electrode terminal 30.

In some embodiments, the first electrode tab 11 is wound in multiple turns around the central axis A of the electrode assembly 10, in other words, the first electrode tab 11 includes multiple turns of electrode tab layers. After the winding is completed, the first electrode tab 11 is generally cylindrical, with gaps left between two adjacent electrode tab layers. The embodiments of the application may perform a treatment on the first electrode tab 11 so as to reduce the gaps between the electrode tab layers and facilitate the connection between the first electrode tab 11 and the current collection member 40. For example, the embodiments of the application may perform a flattening treatment on the first electrode tab 11 so as to gather and converge the end region of the first electrode tab 11 away from the body portion 12 together; the flattening treatment forms a pyknotic end surface 111 at the end of the first electrode tab 11 away from the body portion 12, so as to reduce the gaps between the electrode tab layers and facilitate the connection between the first electrode tab 11 and the current collection member 40. Alternatively, the embodiments of the application may also fill a conductive material between two adjacent electrode tab layers so as to reduce the gaps between the electrode tab layers.

In some embodiments, the second electrode tab 13 is wound in multiple turns around the central axis A of the electrode assembly 10, in other words, the first electrode tab 13 includes multiple turns of electrode tab layers. For example, the second electrode tab 13 is also subjected to a flattening treatment so as to reduce the gaps between the electrode tab layers of the second electrode tab 13.

The central axis A of the electrode assembly 10 is a virtual straight line. The first electrode sheet, the second electrode sheet, and the separator may be wound based on the central axis A.

In some embodiments, the housing 20 includes a cannular body 21 and a cap body 22 connected to the cannular body 21. The cannular body 21 is arranged to encircle an outer periphery of the electrode assembly 10, the cap body 22 is provided with an electrode export hole 221, and the electrode terminal 30 is mounted in the electrode export hole 221.

The cap body 22 and the cannular body 21 may of an integrally formed structure, that is, the housing 20 is an integrally formed member. Of course, the cap body 22 and the cannular body 21 may also be two members separately provided, which are then connected together in way of welding, riveting, bonding and the like.

The electrode export hole 221 penetrates through the cap body 22 so as to facilitate leading the electrical energy in the electrode assembly 10 out to the outside of the housing 20.

The central axis A is a virtual straight line passing through the electrode export hole 221. The central axis A of electrode assembly 10 may coincide or may not coincide with the axis of the electrode export hole 221.

The electrode terminal 30 is used to cooperate with the electrode export hole 221 so as to cover the electrode export hole 221. The electrode terminal 30 may extend into the electrode export hole 221 or may not extend into the electrode export hole 221. The electrode terminal 30 is fixed to the cap body 22. The electrode terminal 30 may be fixed in its entirety to the outside of the cap body 22, or may extend into the interior of the housing 20 through the electrode export hole 221.

In some embodiments, the cap body 22 and the cannular body 21 may be of an integrally formed structure. In this way it is possible to save the connection process between the cap body 22 and the cannular body 21.

When the cap body 22 and cannular body 21 are electrically connected to the positive or negative electrode of the electrode assembly 10, due to the integrated structure at the connection between the cap body 22 and the cannular body 21, the resistance at the connection between the cap body 22 and the cannular body 21 is relatively small, thereby improving the overcurrent capacity. The cap body 22 may be used to be connected to an external component (such as a bus member). When the battery cell 7 is subjected to an external impact, the external component may pull the cap body 22, causing the connection between the cap body 22 and the cannular body 21 to be subjected to a force. The aforesaid technical solution integrates the cap body 22 and the cannular body 21 so as to improve the strength of the connection between the cap body 22 and the cannular body 21, and reduce the risk of connection failure between the cap body 22 and the cannular body 21.

In some embodiments, the housing 20 may be formed by a stretching process.

In some embodiments, the housing 20 has an opening 23 at an end away from the electrode terminal 30, and the battery cell 7 further includes a cover plate 50 for closing the opening.

In particular, the cannular body 21 has an opening 23 at the end away from the cap body 22, and the cover plate 50 is capped at the opening of the cannular body 21 to close the opening 23 of the cannular body 21. The cover plate 50 may be of various structures, for example, the cover plate 50 may be of a plate-like structure.

In some embodiments, the cover plate 50 may be a circular cover plate, a rectangular cover plate, a square cover plate, a hexagonal cover plate, or other shaped cover plate.

In some embodiments, the cover plate 50 is welded to the cannular body 21.

In some embodiments, the cap body 22 is circular, and the electrode assembly 10 is cylindrical; the central axis A coincides with the axis of the electrode export hole 221. This embodiment does not require that the central axis A completely coincides with the axis of the electrode export hole 221, and there can be a deviation therebetween allowed by the process.

In this embodiment, the electrode export hole 221 is generally opened in the middle of the cap body 22, and correspondingly, the electrode terminal 30 is also mounted in the middle of the cap body 22. When a plurality of battery cells 7 are assembled into groups, the requirement for positioning accuracy of the electrode terminals 30 can be reduced, simplifying the assembly process.

For example, the axis of the electrode export hole 221 coincides with the axis of the cap body 22, and the cap body 22 is of an annular structure arranged to encircle the axis of the electrode export hole 221.

For example, the axis of the electrode terminal 30 coincides with the axis of the electrode export hole 221.

In some other embodiments, the cap body 22 may also be rectangular, and the electrode assembly 10 may be flat. The electrode export hole 221 may be disposed close to an end of the cap body 22 in its own length direction.

In some embodiments, the electrode assembly 10 further includes a second electrode tab 13 with opposite polarity to the first electrode tab 11, and the second electrode tab 13 is arranged to encircle the central axis A of the electrode assembly 10. The first electrode tab 11 is arranged at the end of the electrode assembly 10 facing towards the electrode terminal 30, the second electrode tab 13 is arranged at the end of the electrode assembly 10 away from the electrode terminal 30, and the second electrode tab 13 is electrically connected to the housing 20.

The housing 20 itself can serve as an output electrode for the battery cell 7, so as to dispense with one conventional electrode terminal 30 and simplify the structure of the battery cell 7. When a plurality of battery cells 7 are assembled into groups, the housings 20 may be electrically connected to a bus member, so as not only to increase the overcurrent area but also to make the structural design of the bus member more flexible.

In some embodiments, the second electrode tab 13 is the negative electrode tab, and the basis material of the housing 20 is steel. The housing 20 is electrically connected to the negative electrode tab, that is, the housing 20 is in a low potential state. The housing 20 made of steel is not easily corroded by electrolyte solution in the low potential state.

In some embodiments, the cannular body 21 is used to connect the second electrode tab 13 and the cap body 22 so as to electrically connect the second electrode tab 13 and the cap body 22.

The cannular body 21 may be directly electrically connected to the second electrode tab 13, or may also be electrically connected to the second electrode tab 13 through other components. For example, the second electrode tab 13 is electrically connected to the cannular body 21 through the cover plate 50.

The cap body 22 and the electrode terminal 30 have different polarities. Now, one of the cap body 22 and the electrode terminal 30 may serve as the positive output electrode of the battery cell 7, while the other may serve as the negative output electrode of the battery cell 7. This embodiment arranges the positive and negative output electrodes on the same side of the battery cell 7, so that it is possible to simplify the connection process between a plurality of battery cells 7.

The electrode export hole 221 of the embodiments of the application is formed after the housing 20 is formed by stretching.

The inventors once attempted to roll the open end of the cannular body to fold the open end of the cannular body inward and form a flanging structure which presses against the cover plate so as to achieve fixation of the cover plate. The inventors mounted the electrode terminal on the cover plate and used the flanging structure and the electrode terminal as two output electrodes of the battery cell. However, the larger the dimension of the flanging structure is, the higher the risk of curling and wrinkling after forming is; if curling and wrinkling occur in the flanging structure, it will cause the surface of the flanging structure to be uneven, and when the flanging structure is welded to an external bus member, there will be a problem of poor welding. Therefore, the dimension of the flanging structure is relatively limited, resulting in insufficient overcurrent capacity of the battery cell.

This embodiment utilizes the process of trepanning to form an electrode export hole 221 in the cap body 22 for mounting the electrode terminal 30, so as to arrange the positive and negative output electrodes at the end of the battery cell 7 away from the opening of the cannular body 21; the cap body 22 is formed during the forming process of the housing 20, and can be ensured with flatness after trepanning of the electrode export hole 221, ensuring the connection strength between the cap body 22 and the bus member. Meanwhile, the flatness of the cap body 22 is not constrained by its own dimension, so that the cap body 22 can have a larger dimension, thereby improving the overcurrent capacity of the battery cell 7.

In some embodiments, the current collection member 40 abuts with and is connected to an end surface 111 of the first electrode tab 11 facing towards the electrode terminal 30.

The end surface 111 of the first electrode tab 11 and the electrode terminal 30 can clamp the current collection member 40 from two sides, so that both the first electrode tab 11 and the electrode terminal 30 can maintain stable contact with the current collection member 40, so as to reduce the shake of the current collection member 40 when the battery cell 7 is subjected to an external impact and improve the reliability of the battery cell 7.

For example, in the thickness direction Z of the current collection member 40, the first electrode tab 11 and the electrode terminal 30 are arranged on opposite sides of the current collection member 40 respectively.

In some embodiments, when assembling the battery cell 7, it is possible to weld the first electrode tab 11 of the electrode assembly 10 to the current collection member 40 first and then place the electrode assembly 10 and the current collection member 40 into the housing 20. In particular, during welding, the current collection member 40 may be pressed against the flattened end surface 111 of the first electrode tab 11, and then an external welding device may emit a laser on the surface of the current collection member 40 away from the first electrode tab 11, which laser will weld the current collection member 40 to the first electrode tab 11.

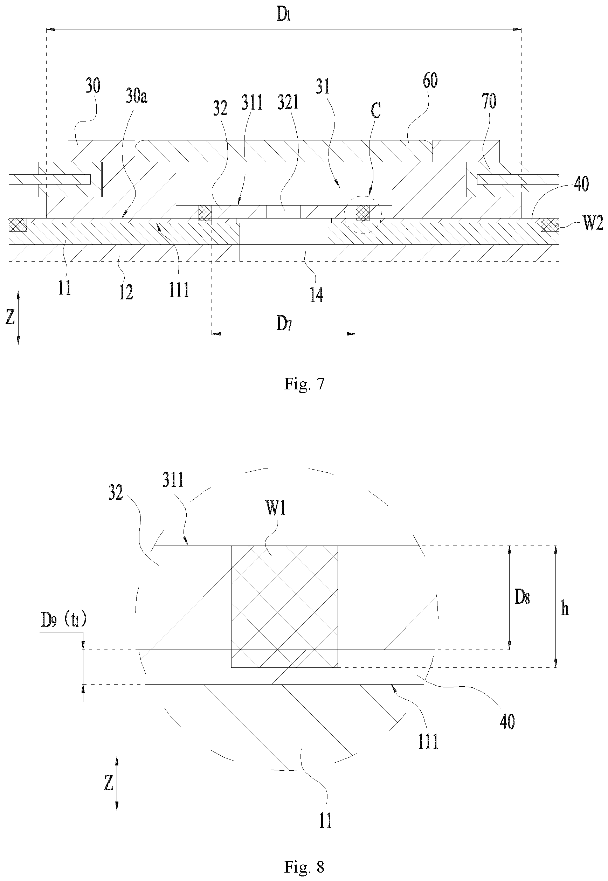

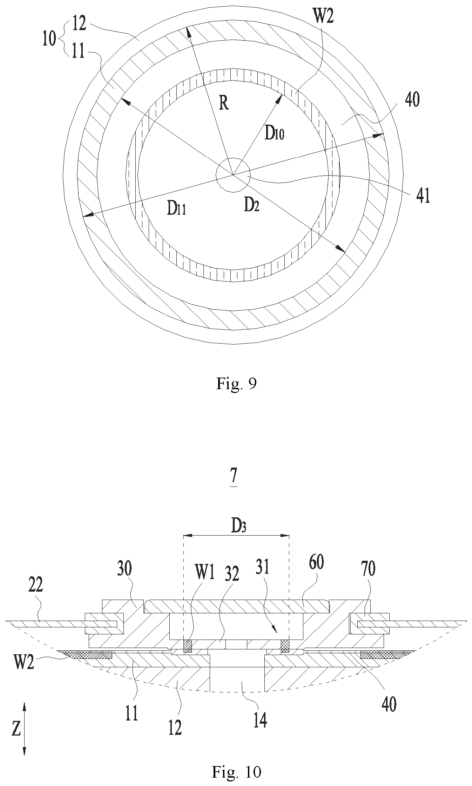

Fig. 7 is a schematic enlarged view at the box B of Fig. 6; Fig. 8 is a schematic enlarged view at the circle C of Fig. 7; Fig. 9 is a schematic structural view of an electrode assembly and a current collection member of a battery cell provided by some embodiments of the application.

Please refer to Figs. 4 to 9 together. In some embodiments, the electrode terminal 30 has an abutting surface 30a abutting with the current collection member 40. The abutting surface 30a is a region of the outer surface of the electrode terminal 30 contacting with the current collection member 40.

The embodiments of the application do not limit the shape of the abutting surface 30a, for example, the abutting surface 30a may be square, circular, trapezoidal, or other shapes. The abutting surface 30a may be a plane surface, or may also be a curved surface.

In some embodiments, the abutting surface 30a is a circular surface. In the embodiments of the application, "circular" relates to the outer contour of the abutting surface 30a. In other words, the abutting surface 30a may be a solid circular surface or may be a hollow circular surface (i.e. the abutting surface 30a may be a circular ring surface).

For example, the abutting surface 30a is a circular plane surface.

The diameter of the abutting surface 30a is D₁. For example, when the abutting surface 30a is an annular surface, D₁ refers to the outer diameter of the annular surface.

In some embodiments, the current collection member 40 may be circular, rectangular, or other shapes.

In some embodiments, the current collection member 40 is circular. "Circular" relates to the outer contour of the current collection member 40. In the thickness direction Z of the current collection member 40, the projection of the current collection member 40 is circular.

In some embodiments, the diameter of the current collection member 40 is D₂, and the minimum thickness of the current collection member 40 is t₁. D₁, D₂ and t₁ satisfy: t₁×D₁/D₂≤0.4.

The first electrode tab 11 is relatively soft, and after flattening or other treatments, there may be a flatness deviation in the end surface 111 of the first electrode tab 11. Similarly, due to production process limitation, there may be a flatness deviation in the surface of the prepared current collection member 40 for contacting with the electrode terminal 30.

When the electrode terminal 30 abuts with the current collection member 40, there may be a tiny gap between the abutting surface of the electrode terminal 30 and the current collection member 40 due to the flatness deviation of the end surface 111 of the first electrode tab 11 and the flatness deviation of the surface of the current collection member 40. If the gap is too large, it will affect the connection strength between electrode terminal 30 and the current collection member 40. For example, the electrode terminal 30 and the current collection member 40 may be connected by welding; if the gap between the electrode terminal 30 and the current collection member 40 is too large, it may cause the risk of virtual welding.

During assembly, the inventors attempted to tightly press the electrode terminal 30 against the current collection member 40 so as to reduce the gap therebetween.

The inventors notice that D₁, D₂ and t₁ all affect the fitness between the electrode terminal 30 and the current collection member 40.

In particular, the larger the value of t₁ is, the higher the strength of the current collection member 40 is, and the less likely the current collection member 40 is to deform when compressed. When a gap occurs between the electrode terminal 30 and the current collection member 40 due to flatness issues, if the value of t₁ is too large, the current collection member 40 is difficult to deform under pressure due to high strength when the electrode terminal 30 and the current collection member 40 are pressed tightly, causing the current collection member 40 to be difficult to closely fit to the electrode terminal 30, resulting in a relatively large gap between the current collection member 40 and the electrode terminal 30.

By reducing the value of t₁, the strength of the current collection member 40 can be reduced, enabling the current collection member 40 to adaptively deform under compression so as to adapt to the shape of the abutting surface 30a.

The larger the value of D₁/D₂ is, the larger the area that the current collection member 40 needs to fit to the electrode terminal 30 is, and the larger the maximum gap between the electrode terminal 30 and the current collection member 40 is when a deviation occurs in the flatness of the current collection member 40. Similarly, the larger the value of D₁/D₂ is, the more difficult it is to reduce the gap by pressing the electrode terminal 30 and the current collection member 40 tightly.

By reducing the value of D₁/D₂, it is possible to reduce the area that needs to fit between the current collection member 40 and the electrode terminal 30, reduce the gap between the electrode terminal 30 and the current collection member 40, and reduce the difficulty of pressing the current collection member 40 and the electrode terminal 30 tightly.

After in-depth research and extensive experiments, the inventors have found that when t₁×D₁/D₂≤0.4, it is possible to reduce the gap between the current collection member 40 and the electrode terminal 30 and improve the connection strength between the current collection member 40 and the electrode terminal 30.

In some embodiments, t₁×D₁/D₂≤0.3.

After in-depth research and extensive experiments, the inventors have found that when t₁×D₁/D₂≤0.3, it is possible to better reduce the gap between the current collection member 40 and the electrode terminal 30 and improve the connection strength between the current collection member 40 and the electrode terminal 30.

In some embodiments, t₁×D₁/D₂≥0.05.

The smaller the value of t₁ is, the smaller the overcurrent area of the current collection member 40 is, and the lower the overcurrent capacity of the current collection member 40 is. Similarly, the smaller the value of D₁/D₂ is, the smaller the contact area between the current collection member 40 and the electrode terminal 30 is, and the smaller the overcurrent area between the current collection member 40 and the electrode terminal 30 is.

The inventors have found that if t₁×D₁/D₂ is too small, it may result in insufficient overcurrent area between the current collection member 40 and the electrode terminal 30, an excessive heat generated from the current collection member 40, affecting the reliability and safety of the battery cell 7.

After in-depth research and extensive experiments, the inventors have found that when t₁×D₁/D₂≥0.05, it is possible to improve the overcurrent capacity between the current collection member 40 and the electrode terminal 30, reduce heat generation, and improve the reliability and safety of the battery cell 7.

In some embodiments, the value of t₁×D₁/D₂ may be 0.05, 0.1, 0.2, 0.3 or 0.4.

In some embodiments, t₁ is 0.1mm-1mm.

The larger the value of t₁ is, the higher the strength of the current collection member 40 is, and the less likely the current collection member 40 is to deform when compressed. When a gap occurs between the electrode terminal 30 and the current collection member 40 due to flatness issues, if the value of t₁ is too large, the current collection member 40 is difficult to deform under pressure due to high strength when the electrode terminal 30 and the current collection member 40 are pressed tightly, causing the current collection member 40 to be difficult to closely fit to the electrode terminal 30, resulting in a relatively large gap between the current collection member 40 and the electrode terminal 30.

The smaller the value of t₁ is, the smaller the overcurrent area of the current collection member 40 is, and the lower the overcurrent capacity of the current collection member 40 is. If the value of t₁ is too small, it may cause an excessive heat generated in the current collection member 40, affecting the reliability and safety of the battery cell 7.

After in-depth research and extensive experiments, the inventors have found that limiting t₁ to 0.1mm-1mm can improve the overcurrent capacity of the current collection member 40, reduce the gap between the current collection member 40 and the electrode terminal 30, and improve the connection strength between the current collection member 40 and the electrode terminal 30.

Optionally, the value of t₁ is 0.1mm, 0.2mm, 0.4mm, 0.5mm, 0.6mm, 0.8mm or 1mm.

In some embodiments, t₁ is 0.2mm-0.6mm.

After in-depth research and extensive experiments, the inventors have found that limiting t₁ to 0.2mm-0.6mm can further improve the overcurrent capacity of the current collection member 40, reduce the gap between the current collection member 40 and the electrode terminal 30, and improve the connection strength between the current collection member 40 and the electrode terminal 30.

In some embodiments, the electrode terminal 30 is welded to the current collection member 40. For example, the current collection member 40 and the electrode terminal 30 are connected by laser welding. The embodiments of the application can reduce the clearance between the current collection member 40 and the electrode terminal 30 at the abutting position, thereby reducing the risk of virtual welding.

In some embodiments, the electrode terminal 30 is welded to the current collection member 40 and forms a first welding portion W1.

During welding, a part of the electrode terminal 30 and a part of the current collection member 40 melt and form a molten pool, which forms the first welding portion W1 after solidification.

Optionally, when the electrode assembly 10 and after the current collection member 40 are mounted into the housing 20 and the current collection member 40 is pressed against the electrode terminal 30, an external welding device can weld the electrode terminal 30 and the current collection member 40 from the side of the electrode terminal 30 away from the current collection member 40 and form the first welding portion W1.

Alternatively, when the electrode assembly 10 and the current collection member 40 are mounted into the housing 20 and after the current collection member 40 is pressed against the electrode terminal 30, an external welding device may also pass through the electrode assembly 10, weld the electrode terminal 30 and the current collection member 40 from the side of the current collection member 40 away from the electrode terminal 30, and form the first welding portion W1.

The embodiments of the application make no specific limitations on the shape, position, depth and quantity of the first welding portion W1. For example, the shape of the first welding portion W1 may be linear, shaped, annular, spiral, V-shaped or other shapes. There may be one or more first welding portion W1.

In some embodiments, the melting point of the electrode terminal 30 is T₁, the melting point of the current collection member 40 is T₂, and T₁/T₂ is 0.8-1.1.

T₁ is the melting point of the electrode terminal 30 at atmospheric pressure, and T2 is the melting point of current collection member 40 at atmospheric condition.

During welding, a part of the electrode terminal 30 and a part of the current collection member 40 melt and form a molten pool, which forms the first welding portion W1 after solidification.

The difference between the melting point of the electrode terminal 30 and the melting point of the current collection member 40 will affect the welding strength of the electrode terminal 30 and the current collection member 40.

After in-depth research and extensive experiments, the inventors have found that when T₁/T₂ is less than 0.8, the melting point of the electrode terminal 30 is lower relative to the melting point of the current collection member 40; if a lower welding power is employed, the current collection member 40 may be difficult to melt and form a miscible body with the electrode terminal 30; if a higher welding power is employed, the electrode terminal 30 may quickly melt and vaporize, creating voids and making it difficult to form effective welding marks.

After in-depth research and extensive experiments, the inventors have found that when T₁/T₂ is greater than 1.1, the melting point of the electrode terminal 30 is higher relative to the melting point of the current collection member 40; if a lower welding power is employed, the electrode terminal 30 is difficult to melt; if a higher welding power is employed, when welding parameters fluctuate, there will be a deviation in the depth of the molten pool, and the current collection member 40 is prone to melt through due to the low melting point.

The inventors limits T₁/T₂ to 0.8-1.1 so as to reduce the difference between the melting point of the electrode terminal 30 and the melting point of the current collection member 40, improve welding process, and enhance welding strength.

For example, the value of T₁/T₂ is 0.8, 0.9, 0.95, 1, 1.05 or 1.1. Optionally, the value of T₁/T₂ is 0.95-1.05.

In some embodiments, the electrode terminal 30 includes a first recess 31 and a connection portion 32 located at a bottom of the first recess 31. The current collection member 40 is welded to the connection portion 32 and forms a first welding portion W1.

The first recess 31 may be recessed in the direction facing towards the electrode assembly 10 from the side of the electrode terminal 30 away from the electrode assembly 10, or may be recessed in the direction away from the electrode assembly 10 from the side of the electrode terminal 30 facing towards the electrode assembly 10.

The first recess 31 may be a cylindrical recess, a conical recess, a stepped recess, or other shaped recess.

For example, the connection portion 32 may be a portion of the electrode terminal 30 corresponding to the bottom surface 311 of the first recess.

In the embodiments of the application, the thickness of the connection portion 32 is reduced by disposing the first recess 31 in the electrode terminal 30, so as to reduce the welding power required for welding the connection portion 32 to the current collection member 40, reduce heat generation, reduce the risk of other components being burned, and improve safety.

In some embodiments, in the thickness direction Z of the current collection member 40, the first welding portion W1 extends from the side of the connection portion 32 away from the current collection member 40 to at least the interior of the current collection member 40.

The first welding portion W1 may penetrate through the current collection member 40. For example, the first welding portion W1 penetrates through the current collection member 40 and the connection portion 32, and the first welding portion W1 is exposed on the surface of the current collection member 40 away from the connection portion 32. Of course, the first welding portion W1 may also not penetrate through the current collection member 40, that is, the first welding portion W1 is not exposed on the surface of the current collection member 40 away from the connection portion 32.

The first welding portion W1 extends from the connection portion 32 into the interior of the current collection member 40 so as to connect the current collection member 40 and the connection portion 32, reducing the contact resistance between the current collection member 40 and the electrode terminal 30 and improving overcurrent capacity.

In some embodiments, in the thickness direction Z of the connection portion 32, the first welding portion W1 does not go beyond the surface of the current collection member 40 away from the connection portion 32. The first welding portion W1 is spaced at a predetermined distance from the surface of the current collection member 40 away from the connection portion 32, so as to prevent the current collection member 40 from being melted through, reduce the risk of metal particles generated on the surface of the current collection member 40 away from the connection portion 32, and improve safety.

In some embodiments, the housing 20 includes a cannular body 21 and a cap body 22 connected to the cannular body 21. The cannular body 21 is arranged to encircle an outer periphery of the electrode assembly 10, the cap body 22 is provided with an electrode export hole 221, and the electrode terminal 30 is mounted in the electrode export hole 221. The first welding portion W1 and the cap body 22 are both circular ring-shaped, an outer diameter of the cap body 22 is D₆, and an inner diameter of the first welding portion W1 is D₇. D₆ and D₇ satisfy: 0.1≤D₇/D₆≤0.6.

The first welding portion W1 may be of a closed structure or a non-closed structure. In other words, the first welding portion W1 may be a semi-circular ring or a complete circular ring. Optionally, the central angle of the circular ring-shaped first welding portion W1 is 180°-360°.

D₆ is positively correlated with the diameter of the electrode assembly 10. The larger D₆ is, the higher the capacity of the electrode assembly 10 is, and the higher the requirement of the battery cell 7 for the overcurrent area of the first welding portion W1 is. The smaller D₇ is, the smaller the perimeter of the first welding portion W1 is, and the smaller the overcurrent area of the first welding portion W1 is. If D₇/D₆ is too small, due to D₆ being relatively large and D₇ being relatively small, it will result in insufficient overcurrent area of the first welding portion W1, and the first welding portion W1 will generate a large amount of heat during charging and discharging, making it difficult to meet the requirements of the battery cell 7 for overcurrent capacity and temperature rise during fast charging. After in-depth research and extensive experiments, the inventors have found that when D₇/D₆≥0.1, it is possible to meet the requirement of the battery cell 7 for overcurrent capacity and temperature rise.

The larger D₇ is, the larger the dimension of the electrode export hole 221 is, and the smaller the area of the cap body 22 is. Similarly, the smaller D₆ is, the smaller the area of the cap body 22 is. If D₇/D₆ is too large, due to D₆ being relatively small and D₇ being relatively large, it will cause the cap body 22 to deform easily when the battery cell 7 vibrates, posing a safety hazard. The cap body 22 may serve as an output electrode of the battery cell 7 to be connected to a bus member. If D₇/D₆ is too large, it will cause the connection area between the cap body 22 and the bus member to be relatively small, the overcurrent area between the cap body 22 and the bus member to be insufficient, and the heat generated at the connection between the cap body 22 and the bus member to be relatively high, making it difficult to meet the requirement of the battery cell 7 for overcurrent capacity and temperature rise during fast charging. After in-depth research and extensive experiments, the inventors have found that when D₇/D₆≤0.6, it is possible to meet the requirements of the battery cell 7 for overcurrent capacity and temperature rise and improve the safety of the battery cell 7.

Optionally, D₇/D₆ may be 0.1, 0.2, 0.3, 0.4, 0.5 or 0.6.

In some embodiments, after in-depth research and extensive experiments, the inventors have found that when 0.2≤D₇/D₆≤0.4, it is possible to better meet the requirements of the battery cell 7 for overcurrent capacity and temperature rise and improve the safety of the battery cell 7.

In some embodiments, D₇ is 5mm-14mm.

If D₇ is too small, it will result in insufficient overcurrent area of the first welding portion W1, and the first welding portion W1 will generate a large amount of heat during charging and discharging, making it difficult to meet the requirements of the battery cell 7 for overcurrent capacity and temperature rise during fast charging. If D₇ is too large, it will result in insufficient overcurrent area between the cap body 22 and the bus member and a relatively high heat generated at the connection between the cap body 22 and the bus member. After in-depth research and extensive experiments, the inventors have found that limiting D₇ to 5mm-14mm can meet the requirement of the battery cell 7 for overcurrent capacity and temperature rise.

Optionally, D₇ is 5mm, 7mm, 9mm, 10mm, 12mm or 14mm.

In some embodiments, in the thickness direction Z of the current collection member 40, the dimension of the first welding portion W1 is h, and the thickness of the connection portion 32 is D₈. D₅ and h satisfy: 1 <h/D₈≤1.5.

The first welding portion W1 is annular, and due to process errors, different regions of the first welding portion W1 may have different fusion depths in the thickness direction Z. h may be the dimension of the region with the smallest fusion depth of the first welding portion W1 in the thickness direction Z.

In some examples, the connection portion 32 is of a flat plate-like structure with a uniform thickness, any portion of the connection portion 32 may be used to be welded to the current collection member 40, and D₈ is the thickness of the connection portion 32. In some other examples, the connection portion 32 is a structure with an uneven thickness, and the region of the connection portion 32 with a smaller thickness may be the region of the connection portion 32 for being welded to the current collection member 40. In this way, it is possible to reduce the power required for welding and reduce heat generation; now D₈ may be the minimum thickness of the connection portion 32.

If h/D₈≤1, the fusion depth of the first welding portion W1 is relatively small, and the entire first welding portion W1 is formed in the connection portion 32, resulting in virtual welding, and the first welding portion W1 is difficult to effectively connect the current collection member 40 and the connection portion 32. When D₈ is constant, the larger h is, the greater the power required for welding is, and the higher the heat generation during the welding process is. If h is too large, the high temperature generated by welding may easily damage the components around the electrode terminal 30, causing a safety hazard.

After in-depth research and extensive experiments, the inventors have found that when 1 <h/D₈≤1.5, it is possible to improve the connection strength between the current collection member 40 and the connection portion 32, reduce welding heat generation, and reduce welding difficulty.

Optionally, h/D₈ is 1.05, 1.1, 1.2, 1.3, 1.4 or 1.5.

In some embodiments, the thickness of the region of the current collection member 40 for being welded to the connection portion 32 is D₉, and D₈ and D₉ satisfy: 0.5≤D₉/D₈≤1.2.

The region of the current collection member 40 for being welded to the connection portion 32 refers to the region corresponding to the surface of the current collection member 40 abutting with the connection portion 32.

When D₈ is constant, the smaller D₉ is, the easier it is for the current collection member 40 to be melted through during the welding process, and the easier it is for the high temperature particles generated by welding to fall into the battery cell 7; the larger D₉ is, the greater the space occupied by and weight of the current collection member 40 is, and the lower the energy density of the battery cell 7 is.

After in-depth research and extensive experiments, the inventors have found that when 0.5≤D₉/D₈≤1.2, it is possible to reduce the risk of melting through the current collection member 40 and reduce the energy density loss of the battery cell 7.

Optionally, D₉/D₈ is 0.5, 0.7, 0.9, 1.0 or 1.2.

In some embodiments, D₈ is 0.4mm-1.2mm.

The smaller D₈ is, the lower the overcurrent capacity of the connection portion 32 is. If D₈ is too small, it may be difficult for the connection portion 32 to meet the requirement of the battery cell 7 for overcurrent capacity and temperature rise during fast charging. The larger D₈ is, the greater the power required for welding is, and the higher the heat generation during the welding process is. If D₈ is too large, the high temperature generated by welding may easily damage the components around the electrode terminal 30, causing a safety hazard.

After in-depth research and extensive experiments, the inventors have found that limiting D₈ to 0.4mm-1.2mm can meet the requirement of the battery cell 7 for overcurrent capacity and temperature rise, reduce welding heat generation, and improve safety.

Optionally, D₈ is 0.4mm, 0.5mm, 0.6mm, 0.8mm, 1.0mm or 1.2mm.

Optionally, after in-depth research and extensive experiments, the inventors have found that limiting D₈ to 0.6mm-1.0mm can better meet the requirement of the battery cell 7 for overcurrent capacity and temperature rise, reduce welding heat generation, and improve safety.

In some embodiments, D₉ is 0.2mm-0.6mm. Optionally, D₉ is 0.3mm-0.5mm.

In some embodiments, the current collection member 40 is welded to the first electrode tab 11 and forms a second welding portion W2.

When assembling the battery cell 7, it is possible to weld the first electrode tab 11 of the electrode assembly 10 to the current collection member 40 first and then place the electrode assembly 10 and the current collection member 40 into the housing 20. In particular, when welding the first electrode tab 11 and the current collection member 40, the current collection member 40 may be pressed against the flattened end surface 111 of the first electrode tab 11, and then an external welding device may emit a laser on the surface of the current collection member 40 away from the first electrode tab 11, which laser will weld the current collection member 40 to the first electrode tab 11.

The shape of the second welding portion W2 may be linear, C-shaped, annular, spiral, V-shaped or other shapes, which is not limited by this embodiment. There may be one or more second welding portion W2.

The second welding portion W2 can reduce the contact resistance between the current collection member 40 and the first electrode tab 11, and improve overcurrent capacity.

In some embodiments, the first electrode tab 11 is arranged to encircle the central axis A of the electrode assembly 10, and the cross section of the first electrode tab 11 perpendicular to the central axis A is circular ring-shaped. The outer radius of the first electrode tab 11 is R, the minimum spacing between the second welding portion W2 and the central axis A in the radial direction of the first electrode tab 11 is D₁₀, and D₁₀ and R satisfy: 0.2≤D₁₀/R≤0.8.

The cross section of the first electrode tab 11 perpendicular to the central axis A is not required to be absolutely circular ring-shaped, and a certain deviation is allowed.

R is positively correlated with the diameter of the electrode assembly 10. The larger R is, the larger the electric current generated by the electrode assembly 10 is, and the higher the requirement of the battery cell 7 for overcurrent area is. The portion of the current collection member 40 close to the central axis A may be used to be welded to the connection portion 32; the smaller D₁₀ is, the smaller the region of the current collection member 40 which can be welded to the connection portion 32 is, and the smaller the overcurrent area between the current collection member 40 and the connection portion 32 is. If D₁₀/R is too small, due to D₁₀ being relatively small and R being relatively large, it will result in insufficient overcurrent area between the current collection member 40 and the connection portion 32, and a large amount of heat will generate at where the current collection member 40 and the connection portion 32 are welded during charging and discharging, making it difficult to meet the requirement of the battery cell 7 for overcurrent capacity and temperature rise during fast charging.

The first electrode tab 11 includes a plurality of electrode tab layers, each of which is wound around the central axis A a turn. In the radial direction of the first electrode tab 11, a plurality of electrode tab layers are stacked in the radius direction of the first electrode tab 11. The electric current in the electrode tab layer directly connected to the second welding portion W2 can be directly transmitted to the current collection member 40 through the second welding portion W2; the electric current in the electrode tab layer that is not connected to the second welding portion W2 needs to be transmitted to the electrode tab layer directly connected to the second welding portion W2 at first, and then it can be transmitted to the current collection member 40 through the second welding portion W2, which results in a difference in the conductive paths between multiple electrode tab layers and the electrode terminal. If the difference is too large, it will easily cause a polarization problem.

If D₁₀/R is too small, then the spacing between the second welding portion W2 and the outermost electrode tab layer will be too large, resulting in a relatively large difference between the current path between the outermost electrode tab layer and the electrode terminal 30 and the current path between the innermost electrode tab layer and the electrode terminal 30, leading to an uneven current density of the first electrode sheet of the electrode assembly 10 and an increased internal resistance.

After in-depth research and extensive experiments, the inventors have found that when D₁₀/R≥0.2, it is possible to meet the requirement of the battery cell 7 for overcurrent capacity and temperature rise.

The larger D₁₀ is, the farther outward the electrode tab layer directly connected to the second welding portion W2 is located. If D₁₀ is too large, it will cause the amount of the electrode tab layers connected by the second welding portion W2 to be relatively small and the spacing between the second welding portion W2 and the innermost electrode tab layer to be too large, resulting in a relatively large difference between the current path between the outermost electrode tab layer and the electrode terminal 30 and the current path between the innermost electrode tab layer and the electrode terminal 30, leading to an uneven current density of the first electrode sheet and an increased internal resistance.

After in-depth research and extensive experiments, the inventors have found that when D₁₀/R≤0.8, it is possible to reduce the difference in current paths between different positions of the first electrode tab 11 and the electrode terminal 30, improve the uniformity of current density of the first electrode sheet of the electrode assembly 10, reduce internal resistance, and improve overcurrent capacity

Optionally, D₁₀/R is 0.2, 0.3, 0.5, 0.7 or 0.8.

In some embodiments, after in-depth research and extensive experiments, the inventors have found that when 0.2≤D₁₀/R≤0.5, it is possible to better improve the overcurrent capacity of the battery cell 7 and reduce the temperature rise of the battery cell 7.

In some embodiments, D₁₀ is 3.5mm-10mm.

If D₁₀ is too small, it will result in insufficient overcurrent area of the current collection member 40 and the connection portion 32, and a large amount of heat will generate at where the current collection member 40 and the connection portion 32 are welded during charging and discharging, making it difficult to meet the requirement of the battery cell 7 for overcurrent capacity and temperature rise during fast charging. After in-depth research and extensive experiments, the inventors have found that when D₁₀≥3.5mm, it is possible to meet the requirement of the battery cell 7 for overcurrent capacity and temperature rise.

If D₁₀ is too large, it will cause the amount of the electrode tab layers connected by the second welding portion W2 to be relatively small, and the spacing between the electrode tab layer close to the central axis A and the second welding portion W2 will be too large, resulting in a high internal resistance of the electrode assembly 10 and affecting the performance of the battery cell 7. After in-depth research and extensive experiments, the inventors have found that when D₁₀≤10mm, it is possible to reduce the internal resistance of the electrode assembly 10 and improve the charging and discharging performance of the battery cell 7.

Optionally, D₁₀ is 3.5mm, 4mm, 5mm, 7mm, 8.5mm or 10mm.

In some embodiments, R is 20mm-22.8mm.

In some embodiments, the second welding portion W2 is annular. The annular second welding portion W2 has a relatively large overcurrent area, which can improve the uniformity of the current density of the first electrode sheet, reduce the internal resistance and improve the overcurrent capacity.

In some embodiments, the diameter of the current collection member 40 is D₂, the diameter of the first electrode tab 11 is D₁₁, and D₂ is less than D₁₁.

D₂ refers to the diameter of the outer edge of the current collection member 40, which is the outer diameter of the current collection member 40. D₁₁ refers to the diameter of the outer edge of the first electrode tab 11, which is the outer diameter of the first electrode tab 11. For example, D₁₁=2*R.

The current collection member 40 has a relatively small diameter, which can save the space occupied by and weight of the current collection member 40, and improve the energy density of the battery cell 7.

In some embodiments, D₂ and D₁: satisfy: 0.75≤D₂/D₁₁≤0.97.

When D₁₁ is constant, if D₂ is too small, then the distance between the outer portion of the first electrode tab 11 and the current collection member 40 is too large, and the conductive path between the outer portion of the first electrode tab 11 and the current collection member 40 is too long, resulting in a relatively high internal resistance of the electrode assembly 10 and affecting the performance of the battery cell 7. After in-depth research and extensive experiments, the inventors have found that when D₂/D₁₁≥0.75, it is possible to reduce the internal resistance of the electrode assembly 10 and improve the charging and discharging performance of the battery cell 7.

When D₁₁ is constant, if D₂ is too large, due to assembly errors, the coaxiality between the current collection member 40 and the electrode assembly 10 will fluctuate, causing the current collection member 40 to protrude from the outer peripheral surface of the electrode assembly 10, making it difficult for the current collection member 40 and the electrode assembly 10 to enter the housing, affecting assembly efficiency and product yield. After in-depth research and extensive experiments, the inventors have found that when D₂/D₁₁≤0.97, it is possible to reduce the risk of the current collection member 40 protruding from the outer periphery surface of the electrode assembly 10 due to errors and improve assembly efficiency and product yield.

Optionally, D₂/D₁₁ may be 0.75, 0.8, 0.85, 0.9, 0.95 or 0.97.

In some embodiments, D₂ is 35mm-44mm. After in-depth research and extensive experiments, the inventors have found that limiting D₂ to 35mm-44mm can reduce the internal resistance of the electrode assembly 10, improve the charging and discharging performance of the battery cell 7, and reduce the risk of the current collection member 40 protruding from the outer periphery surface of the electrode assembly 10 due to errors.

Optionally, D₂ may be 35mm, 38mm, 40mm, 41mm, 43mm or 44mm.

In some embodiments, after in-depth research and extensive experiments, the inventors have found that limiting D₂ to 38mm-41mm can better reduce the internal resistance of the electrode assembly 10 and improve the charging and discharging performance of the battery cell 7.

In some embodiments, the connection portion 32 is provided with a first through hole 321, and the first through hole 321 is used to connect the space lateral to the connection portion 32 away from the electrode assembly 10 to the internal space of the housing 20.

The first through hole 321 forms an opening in the bottom surface 311 of the first recess.

During the forming process of the battery cell 7, the first through hole 321 may be used for multiple forming processes. For example, the first through hole 321 may be applied to the liquid injection process, the formation process, or other processes.

In particular, the first through hole 321 is used to inject an electrolyte solution into the internal space of the housing 20. When liquid injection is required, the liquid injection head of the liquid injection device is pressed against the connection portion 32, and then the liquid injection head injects electrolyte solution into the housing 20 through the first through hole 321.

In the formation process of the battery cell 7, a gas will be generated inside the housing 20, and the first through hole 321 may also be used to be in communication with an external negative pressure device so as to extract the gas inside the housing 20.

In some embodiments, the current collection member 40 is provided with a second through hole 41, and the second through hole 41 is configured to be arranged corresponding to the first through hole 321 so as to enable the electrolyte solution to flow into the internal space of the housing 20 through the second through hole 41.

In some embodiments, the electrode assembly 10 is of a wound structure, and the electrode assembly 10 has a third through hole 14 at the winding center. The third through hole 14 passes through the electrode assembly 10. The third through hole 14 is arranged corresponding to the first through hole 321 and the second through hole 41 so as to enable the electrolyte solution to flow into the interior of the electrode assembly 10 through the third through hole 14.

In some embodiments, the battery cell 7 further includes a seal plate 60, and the seal plate 60 is connected to the electrode terminal 30 and closes the opening of the first recess 31.

The seal plate 60 may be located outside the first recess 31 in its entirety or may also be partially accommodated in the first recess 31, as long as the seal plate 60 can close the opening of the first recess 31.

The seal plate 60 can protect the connection portion 32 from the outside, reduce external impurities entering the first recess 31, reduce the risk of damage to the connection portion 32 by external impurities, and improve the sealing performance of the battery cell 7.

In addition, the seal plate 60 can also function to seal the first through hole 321. After the formation of battery cell 7, the seal plate 60 can reduce the risk of electrolyte solution leaking through the first through hole 321 and the first recess 31, and improve the sealing performance.

In some embodiments, the first recess 31 is provided with a step surface on the side wall, at least a part of the seal plate 60 is accommodated in the first recess 31, and the step surface is used to support the seal plate 60.

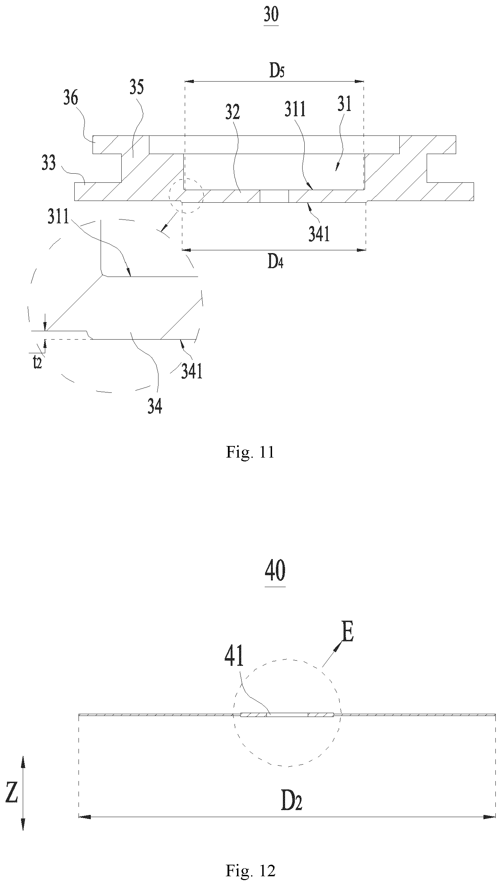

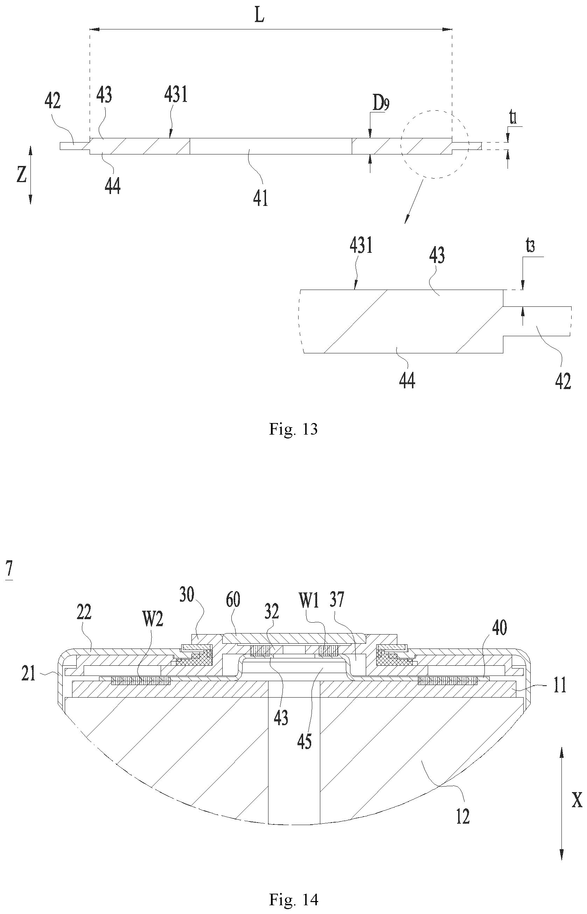

Fig. 10 is a schematic partial sectional view of a battery cell provided by some further embodiments of the application; Fig. 11 is a schematic sectional view of the electrode terminal as shown in Fig. 10; Fig. 12 is a schematic sectional view of the current collection member as shown in Fig. 10; Fig. 13 is a schematic enlarged view at the circle E of Fig. 12.

As shown in Figs. 10 to 13, in some embodiments, in the thickness direction Z of the current collection member 40, the surface of the electrode terminal 30 closest to the electrode assembly 10 abuts with the current collection member 40.

During the process of the electrode assembly 10 and the current collection member 40 entering the housing, the current collection member 40 abuts with the surface of the electrode terminal 30 closest to the electrode assembly 10 at first, and in this way it is possible to shorten the stroke of the current collection member 40 entering the housing and improve assembly efficiency.

In some embodiments, the surface of the electrode terminal 30 closest to the electrode assembly 10 is a plain surface perpendicular to the thickness direction Z.

In some embodiments, the electrode terminal 30 includes a limit portion 33 and a first projection 34, and the limit portion 33 is accommodated in the housing 20. In the thickness direction Z of the current collection member 40, the limit portion 33 overlaps at least partially with the housing 20, and a top end surface 341 of the first projection is closer to the electrode assembly 10 than the limit portion 33. The top end surface 341 of the first projection abuts with the current collection member 40.

The top end surface 341 of the first projection is the surface of the electrode terminal 30 closest to the electrode assembly 10 in the thickness direction Z. The top end surface 341 of the first projection includes an abutting surface of the electrode terminal 30.

The top end surface 341 of the first projection may abut with the current collection member 40 in its entirety, or may also abut with the current collection member 40 only in its partial region.

In the thickness direction Z, at least a part of the first projection 34 protrudes lateral to the limit portion 33 towards the electrode assembly 10. In other words, in the thickness direction Z, the first projection 34 may protrude lateral to the limit portion 33 towards the electrode assembly 10 in its entirety, or may also only partially protrude lateral to the limit portion 33 towards the electrode assembly 10.

The limit portion 33 may be directly connected to the first projection 34, or may also be indirectly connected to the first projection 34 through other portions of the electrode terminal 30.

The embodiments of the application do not limit the structure of the current collection member 40, and the current collection member 40 may be of a flat plate-like structure or may also be of other structures.

In the embodiments of the application, the limit portion 33 can be limited by the housing 20 so as to reduce the risk of the electrode terminal 30 penetrating out of the housing 20 and improve the reliability of the battery cell 7. The top end surface 341 of the first projection protrudes from the limit portion 33, so as to form a clearance between the limit portion 33 and the current collection member 40, reduce the fitted area between the current collection member 40 and the electrode terminal 30, thereby reducing the gap between the current collection member 40 and the first projection 34 and improving the connection strength between the current collection member 40 and the electrode terminal 30.

In some embodiments, in the thickness direction Z of the current collection member 40, the limit portion 33 overlaps at least partially with the cap body 22.

In some embodiments, the electrode terminal 30 further includes a pillar 35 and an outer flange 36. The pillar 35 passes through the electrode export hole 221, and the outer flange 36 is located outside the cap body 22 and protrudes from the outer periphery surface of the pillar 35.

The limit portion 33 and the outer flange 36 can clamp a portion of the cap body 22 from opposite sides so as to fix the electrode terminal to the cap body 22. The limit portion 33 and the outer flange 36 may directly clamp the cap body 22, or may also indirectly clamp the cap body 22 through other components (such as an insulation seal 70).

In some embodiments, the limit portion 33 is an annular structure surrounding the pillar 35.

In some embodiments, the first projection 34 protrudes from the surface of the pillar 35 facing towards the electrode assembly 10. For example, the first recess 31 is disposed in the pillar 35.

In some embodiments, the surface of the limit portion 33 facing towards the electrode assembly 10 is flush with the surface of the pillar 35 facing towards the electrode assembly 10.

In some embodiments, in the thickness direction Z of the current collection member 40, a dimension t₂ of the first projection 34 protruding from the limit portion 33 is 0.05mm-0.35mm.

The smaller t₂ is, the higher the risk of compression between the current collection member 40 and the limit portion 33 is; if t₂ is too small, the limit portion 33 may affect the abutting between the top end surface 341 of the first projection and the current collection member 40. The larger t₂ is, the larger the space occupied by the electrode terminal 30 is, and the lower the utilization rate of space inside the battery cell 7 is.

After in-depth research and extensive experiments, the inventors have found that limiting the value of t₂ to 0.05mm-0.35mm can further reduce the risk of the limit portion 33 abutting with the current collection member 40, reduce the gap between the current collection member 40 and the top end surface 341 of the first projection, and reduce the loss of space utilization rate of the battery cell 7.

Optionally, t₂ is 0.05mm, 0.1mm, 0.15mm, 0.2mm, 0.25mm, 0.3mm or 0.35mm.

In some embodiments, t₂ is 0.15mm-0.25mm. After in-depth research and extensive experiments, the inventors have found that limiting the value of t₂ to 0.15mm-0.25mm can further reduce the risk of the limit portion 33 abutting with the current collection member 40, reduce the gap between the current collection member 40 and the top end surface 341 of the first projection, and reduce the loss of space utilization rate of the battery cell 7.

In some embodiments, the region of the electrode terminal 30 corresponding to the top end surface 341 of the first projection is welded to the current collection member 40 and forms a first welding portion W1.

The top end surface 341 of the first projection may be circular, rectangular, or other shapes.

The region of the electrode terminal 30 corresponding to the top end surface 341 of the first projection refers to the solid portion of the electrode terminal 30 corresponding to the top end surface 341 of the first projection in the thickness direction Z. During welding, at least a part of the region of the electrode terminal 30 corresponding to the top end surface 341 of the first projection is melted.

The top end surface 341 of the first projection directly abuts with the current collection member 40, and the gap therebetween is relatively small; by welding the region of the electrode terminal 30 corresponding to the top end surface 341 of the first projection to the current collection member 40, it is possible to reduce the risk of virtual welding and improve welding strength.

In some embodiments, the first welding portion W1 is circular ring-shaped, and the outer diameter of the first welding portion W1 is D₃.

The first welding portion W1 may be of a closed structure or a non-closed structure. In other words, the first welding portion W1 may be a semi-circular ring or a complete circular ring.

In some embodiments, the top end surface 341 of the first projection 341 is a circular surface. The top end surface 341 of the first projection may be a solid circular surface or may be a hollow circular surface (i.e. the top end surface 341 of the first projection may be a circular ring surface).

The diameter of the top end surface 341 of the first projection is D₄. For example, the top end surface 341 of the first projection is an annular surface, and D₄ refers to the outer diameter of the annular surface.

In some embodiments, D₃ is less than D₄.

During welding, there may be errors in the welding device, resulting in a fluctuation in the welding position. If D₃ is equal to D₄, when the welding position fluctuates, welding may occur out of the top end surface 341 of the first projection, resulting in the risk of virtual welding. The embodiments of the application makes D₃ less than D₄, so as to absorb welding errors, reduce the risk of virtual welding and improve welding strength.

In some embodiments, the electrode terminal 30 is provided with a first recess 31 on the side away from the first electrode tab 11, a portion between the bottom surface 311 of the first recess and the top end surface 341 of the first projection forms a connection portion 32, and the connection portion 32 is welded to the current collection member 40 and forms the first welding portion W1.

The embodiments of the application do not limit the dimension relationship between the bottom surface 311 of the first recess and the top end surface 341 of the first projection.

For example, in the thickness direction Z, the bottom surface 311 of the first recess overlaps at least partially with the top end surface 341 of the first projection. The region where the bottom surface 311 of the first recess overlaps with the top end surface 341 of the first projection in the thickness direction Z forms the connection portion 32.

In the embodiments of the application, the thickness of the connection portion 32 is reduced by disposing the first recess 31 in the electrode terminal 30, so as to reduce the welding power required for welding the connection portion 32 to the current collection member 40, reduce heat generation, reduce the risk of other components being burned, and improve safety.

In some embodiments, in the thickness direction Z, the projection of the bottom surface 311 of the first recess fall within the projection of the top end surface 341 of the first projection.

In some embodiments, the bottom surface 311 of the recess is a circular surface. The bottom surface 311 of the first recess is a circular surface. The bottom surface 311 of the first recess may be a solid circular surface or may be a hollow circular surface (i.e. the bottom surface 311 of the first recess may be an annular surface).

In some embodiments, the diameter of the bottom surface 311 of the first recess is D₅. For example, when the bottom surface 311 of the first recess is an annular surface, D₅ is the outer diameter of the annular surface. Optionally, the bottom surface 311 of the first recess is a plane surface.

In some embodiments, D₅ is less than D₄.

Disposing the first recess 31 may reduce the thickness of the region of the electrode terminal 30 facing towards the bottom surface 311 of the first recess, and the first projection 34 may increase the thickness of the region of the electrode terminal 30 facing towards the top end surface 341 of the first projection. When the thickness of the connection portion 32 is constant, if D₅ is greater than or equal to D₄, due to process errors, some local regions of the bottom surface 311 of the first recess may be unable to face towards the top end surface 341 of the first projection, resulting in a local thickness of the electrode terminal 30 being less than the thickness of the connection portion 32, leading to a lower local strength of the electrode terminal 30, so that the electrode terminal 30 may fracture when the battery cell 7 is subjected to an external impact.

The embodiments of the application make D₅ less than D₄ so as to reduce the impact of the first recess 31 on the strength of the electrode terminal 30, reduce the risk of the electrode terminal 30 fracturing, and improve the reliability of the battery cell 7.

In some embodiments, in the thickness direction Z of the current collection member 40, the entire first projection 34 is closer to the electrode assembly 10 than the limit portion 33.

In some embodiments, the current collection member 40 is welded to the first electrode tab 11 and forms a second welding portion W2. In the thickness direction Z of the current collection member 40, the second welding portion W2 does not overlap with the top end surface 341 of the first projection.

The surface of the second welding portion W2 is uneven. If the top end surface 341 of the first projection is pressed against the second welding portion W2, it may increase the gap between the top end surface 341 of the first projection and the current collection member 40, affecting the welding effect between the current collection member 40 and the electrode terminal 30.

In the embodiments of the application, the second welding portion W2 and the top end surface 341 of the first projection do not overlap in the thickness direction Z, thereby reducing the risk of the top end surface 341 of the first projection abutting with the second welding portion W2, reducing the gap between the top end surface 341 of the first projection and the current collection member 40, and improving welding strength.

In some embodiments, at least a part of the second welding portion W2 is located lateral to the electrode terminal 30 towards the first electrode tab 11 and is arranged to be spaced apart from the electrode terminal 30.

The first projection 34 can abut against the current collection member 40 so as to form a clearance between the electrode terminal 30 and the current collection member 40, and the clearance can keep clear of the second welding portion W2.

In the embodiments of the application, by arranging the second welding portion W2 spaced apart from the electrode terminal 30, it is possible to reduce the risk of the second welding portion W2 obstructing the electrode terminal 30 abutting with the current collection member 40 and to reduce over positioning. The second welding portion W2 may extend to the region of the first electrode tab 11 facing towards the electrode terminal 30 in the thickness direction Z, and in this way, it is possible to connect more electrode tab layers to the second welding portion W2, thereby improving overcurrent capacity and reducing polarization of the electrode sheet.

In some embodiments, the diameter of the current collection member 40 is D₂, the diameter of the top end surface 341 of the first projection is D₄, and D₄/D₂≤0.4.

The larger the value of D₄/D₂ is, the larger the area that the current collection member 40 needs to fit to the top end surface 341 of the first projection is, and the larger the maximum gap between the top end surface 341 of the first projection and the current collection member 40 is when a deviation occurs in the flatness of the current collection member 40. Similarly, the larger the value of D₄/D₂ is, the more difficult it is to reduce the gap by pressing the electrode terminal 30 and the current collection member 40 tightly.

By reducing the value of D₄/D₂, it is possible to reduce the area that needs to fit between the current collection member 40 and the top end surface 341 of the first projection, reduce the gap between the electrode terminal 30 and the current collection member 40, and reduce the difficulty of pressing the current collection member 40 and the first projection 34 tightly.

After in-depth research and extensive experiments, the inventors have found that when D₄/D₂≤0.4, it is possible to reduce the gap between the current collection member 40 and the first projection 34 and improve the connection strength between the current collection member 40 and the first projection 34.

In some embodiments, the current collection member 40 may be of a flat plate-like structure. For example, the embodiments of the application may also adopt the current collection member as shown in Fig. 6.

In some embodiments, the current collection member 40 includes a current collection body 42 and a second projection 43. The current collection body 42 is connected to the first electrode tab 11, the second projection 43 protrudes from the surface of the current collection body 42 facing towards the electrode terminal 30, and a top end surface 431 of the second projection abuts with the electrode terminal 30. The current collection body 42 is arranged spaced apart from the electrode terminal 30.

The embodiments of the application do not limit the structure of electrode terminal 30. For example, the electrode terminal 30 may adopt the electrode terminal as shown in Fig. 6, that is, the electrode terminal may be provided with no first projection. Of course, alternatively, the electrode terminal may also adopt the electrode terminal as shown in Fig. 10, that is, the electrode terminal may be provided with a first projection.

At least a part of the top end surface 431 of the second projection abuts with the electrode terminal 30.

In the embodiments of the application, by disposing a second projection 43 in the current collection member 40, it is possible to form a clearance between the current collection member 42 and the electrode terminal 30, reduce the fitted area between the current collection member 40 and the electrode terminal 30, thereby reducing the gap between the second projection 43 and the current collection member 40 and improving the connection strength between the current collection member 40 and the electrode terminal 30.

In some embodiments, the second projection 43 may be a solid projection or may also be a hollow projection.

In some embodiments, in the thickness direction Z of the current collection member 40, the dimension t₃ of the second projection 43 protruding from the current collection body 42 is 0.05mm-0.25mm.

The smaller t₃ is, the higher the risk of the current collection body 42 abutting with the electrode terminal 30 is; if t₃ is too small, the current collection body 42 may affect the abutting between the top end surface 431 of the second projection and the electrode terminal 30. The larger t₃ is, the larger the space occupied by the current collection member 40 is, and the lower the utilization rate of space inside the battery cell 7 is.

After in-depth research and extensive experiments, the inventors have found that limiting the value of t₃ to 0.05mm-0.25mm can reduce the risk of the current collection body 42 abutting with the electrode terminal 30, reduce the gap between the electrode terminal 30 and the top end surface 431 of the second projection, and reduce the loss of space utilization rate of the battery cell 7.

Optionally, t₃ is 0.05mm, 0.1mm, 0.15mm, 0.2mm or 0.25mm.

In some embodiments, t₃ is 0.1mm-0.2mm. After in-depth research and extensive experiments, the inventors have found that limiting the value of t₃ to 0.1mm-0.2mm can further reduce the risk of the current collection body 42 abutting with the electrode terminal 30, reduce the gap between the electrode terminal 30 and the top end surface 431 of the second projection, and reduce the loss of space utilization rate of the battery cell 7.

In some embodiments, the region of the current collection body 42 surrounding outside the second projection 43 is welded to the first electrode tab 11.

During welding, the second projection 43 will not obstruct the region of the current collection body 42 surrounding outside the second projection 43, and in this way it is possible to reduce welding difficulty and reduce welding power.

In some embodiments, the top end surface 431 of the second projection is a circular surface. The top end surface 431 of the second projection may be a solid circular surface or may be a hollow circular surface (i.e. the top end surface 431 of the second projection may be a circular ring surface).

The diameter of the top end surface 431 of the second projection is L. For example, the top end surface 431 of the second projection is a circular ring surface, and L is the outer diameter of the circular ring surface.

In some embodiments, the diameter of the current collection member 40 is D₂, the diameter of the top end surface 431 of the second projection is L, and L/D₂≤0.4.

The larger the value of L/D₂ is, the larger the area that the electrode terminal 30 needs to fit to the top end surface 431 of the second projection is, and the larger the maximum gap between the top end surface 431 of the second projection and the electrode terminal 30 is when a deviation occurs in the flatness of the current collection member 40. Similarly, the larger the value of L/D₂ is, the more difficult it is to reduce the gap by pressing the electrode terminal 30 and the current collection member 40 tightly.

By reducing the value of L/D₂, it is possible to reduce the area that needs to fit between the electrode terminal 30 and the top end surface 431 of the second projection, reduce the gap between the electrode terminal 30 and the current collection member 40, and reduce the difficulty of pressing the electrode terminal 30 and the second projection 43 tightly.

After in-depth research and extensive experiments, the inventors have found that when L/D₂≤0.4, it is possible to reduce the gap between the electrode terminal 30 and the second projection 43 and improve the connection strength between the electrode terminal 30 and the second projection 43.

In some embodiments, the electrode terminal 30 includes a first projection 34, and a top end surface 341 of the first projection abuts with the top end surface 431 of the second projection.

The embodiments of the application do not limit the dimension of the top end surface 341 of the first projection and the top end surface 431 of the second projection. In some examples, in the thickness direction Z, the projection of the top end surface 341 of the first projection falls within the projection of the top end surface 431 of the second projection; in some other examples, in the thickness direction Z, the projection of the top end surface 431 of the second projection falls within the projection of the top end surface 341 of the first projection; in some yet other examples, in the thickness direction Z, the projection of the top end surface 431 of the second projection partially overlaps with the projection of the top end surface 341 of the first projection.

The embodiments of the application dispose the first projection 34 and the second projection 43 at the same time, so as to further reduce the fitted area between the current collection member 40 and the electrode terminal 30, thereby reducing the gap between the first projection 34 and the second projection 43 and improving the connection strength between the current collection member 40 and the electrode terminal 30.

In some embodiments, the current collection member 40 further includes a third projection 44, and the third projection 44 protrudes from the surface of the current collection body 42 facing towards the first electrode tab 11.

When assembling the electrode assembly 10 and the current collection member 40, the third projection 44 may be embedded into the first electrode tab 11 by pressing the first electrode tab 11, thereby improving the contact stability between the first electrode tab 11 and the current collection member 40.

In some embodiments, in the thickness direction Z, the second projection 43 overlaps at least partially with the third projection 44.

In some embodiments, the third projection 44 and the second projection 43 are symmetrical with respect to the current collection body 42. For example, the current collection body 42 is of a flat plate-like structure with a uniform thickness.

The embodiments of the application can achieve the function of anti-fooling, and there is no need to judge the positive or negative direction of the current collection member 40 when assembling the electrode assembly 10 and the current collection member 40, thereby improving assembly efficiency.

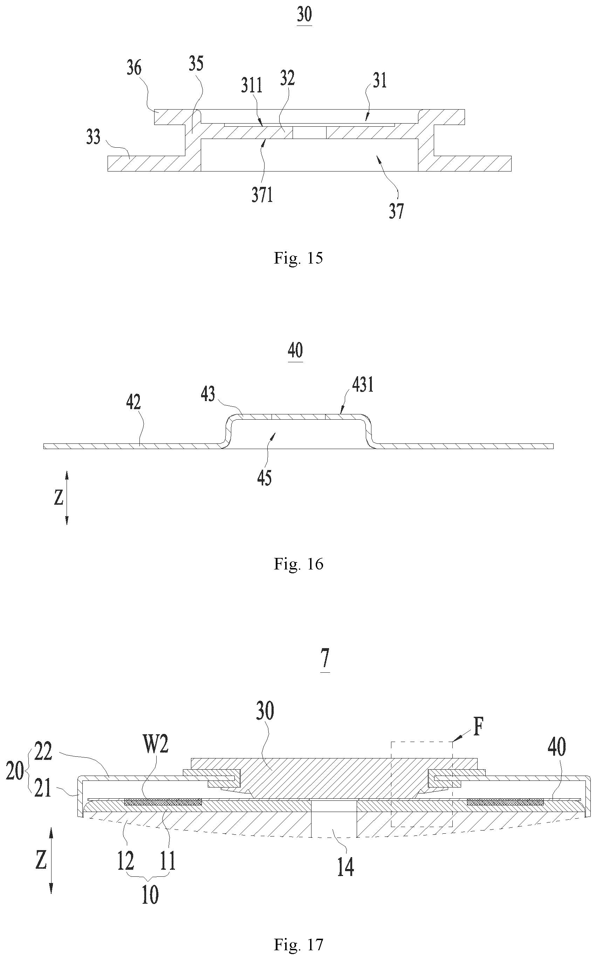

Fig. 14 is a schematic partial sectional view of a battery cell provided by some further embodiments of the application; Fig. 15 is a schematic sectional view of the electrode terminal as shown in Fig. 14; Fig. 16 is a schematic sectional view of the current collection member as shown in Fig. 14.

As shown in Figs. 14 to 16, in some embodiments, the electrode terminal 30 is provided with a second recess 37 on a side facing towards the current collection member 40. At least a part of the second projection 43 is accommodated in the second recess 37, and the top end surface 431 of the second projection abuts with a bottom surface 371 of the second recess.

The bottom surface 371 of the second recess includes an abutting surface of the electrode terminal 30.

The second recess 37 can position the second projection 43, thereby simplifying the assembly process of the electrode terminal 30 and the current collection member 40 and improving assembly efficiency.

In some embodiments, the electrode terminal 30 is provided with a first recess 31 on a side away from the current collection member 40. The portion between the bottom surface 311 of the first recess and the bottom surface 371 of the second recess forms the connection portion 32. The connection portion 32 is welded to the second projection 43 and forms the first welding portion W1. For example, the first recess 31 has a step surface.

The embodiments of the application dispose the first recess 31 and the second recess 37 at the same time to reduce the thickness of the connection portion 32, and in this way, it is possible to reduce the requirement for the depth of the first recess 31 and simplifying the formation process. By disposing the second recess 37, it is also possible to increase the internal space of the battery cell 7 and improve energy density.

In some embodiments, the current collection member 40 is provided with a third recess 45 at a position corresponding to the second projection 43, and the third recess 45 is recessed relative to the surface of the current collection body 42 facing towards the first electrode tab 11.

The third recess 45 can reduce the space occupied by the current collection member 40 and reduce the weight of the current collection member 40. For example, the second projection 43 and the third recess 45 are formed by stamping the current collection member 40.

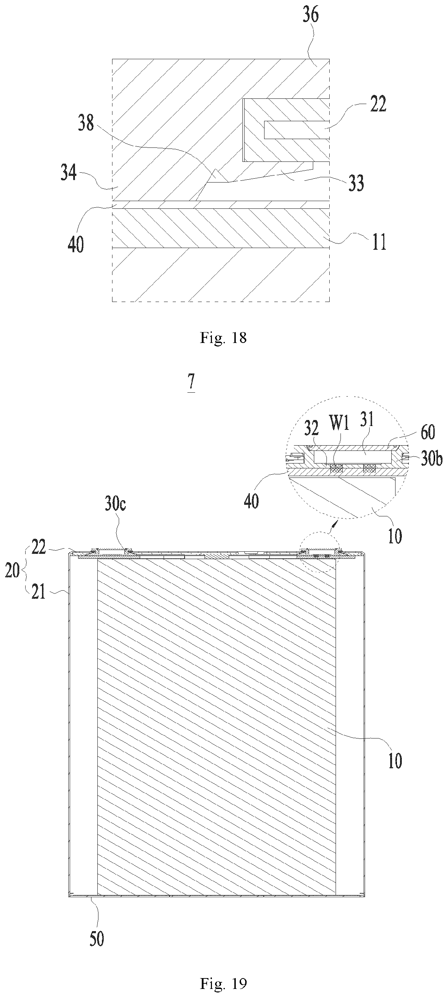

Fig. 17 is a schematic partial sectional view of a battery cell provided by some further embodiments of the application; Fig. 18 is a schematic enlarged view at the box F of Fig. 17.

As shown in Figs. 17 and 18, in some embodiments, the electrode terminal 30 is provided with an annular recess 38 on the side facing towards the electrode assembly 10, and the annular recess 38 is arranged to encircle the first projection 34. The annular recess 38 is recessed relative to the surface of the limit portion 33 facing towards the electrode assembly 10, and separates at least a part of the limit portion 33 from the first projection 34.

For example, the limit portion 33 is formed around the first projection 34, and the limit portion 33 is of a shape bent towards the inner surface of the cap body 22 so as to be riveted to the inner surface of the cap body 22.

For example, the limit portion 33 is an annular structure arranged surrounding the first projection 34.

The limit portion 33 and the first projection 34 define an annular recess 38. The first projection 34 protrudes from the bottom end of the annular recess 38.

The annular recess 38 can separate at least a part of the limit portion 33 from the first projection 34, so as to reduce the acting force transmitted to the limit portion 33 when the first projection 34 is compressed and reduce the risk of deformation of the limit portion 33.

In some embodiments, after inserting the electrode terminal 30 into the electrode export hole 221, the electrode terminal 30 may be pressed from inside of the housing 20 so as to make the material of the electrode terminal 30 flow outward and form the limit portion 33 that bends and folds outward. The electrode terminal 30 forms an annular recess 38 at the compressed position.

Fig. 19 is a schematic sectional view of a battery cell provided by some further embodiments of the application.

As shown in Fig. 19, in some embodiments, the battery cell 7 may be a square battery cell.

In some embodiments, the housing 20 includes a cannular body 21 and a cap body 22 which are integrally formed. The cannular body 21 is arranged to encircle the outer periphery of the electrode assembly 10. For example, the cannular body 21 may be a square cylinder.

The cannular body 21 has an opening at an end away from the cap body 22, and the cover plate 50 is capped at the opening of the cannular body 21 to close the opening of the cannular body 21. For example, the cover plate 50 is welded to the cannular body 21.

In some embodiments, the battery cell 7 further includes a first electrode terminal 30b and a second electrode terminal 30c with opposite polarities. The first electrode terminal 30b is used to be electrically connected to the first electrode tab of the electrode assembly 10, and the second electrode terminal 30c is used to be electrically connected to the second electrode tab of the electrode assembly 10.

In some embodiments, both the first electrode terminal 30b and the second electrode terminal 30c are mounted on the cap body 22.

In the battery, a bus member connects the electrode terminals of a plurality of battery cells 7 so as to connect the plurality of battery cells 7 in series, in parallel or in the mixed manner. The first electrode terminal 30b and the second electrode terminal 30c can both be used to be connected to the bus member.

When the battery is subjected to an external impact, the bus member will pull the cap body 22 through the first electrode terminal 30b and the second electrode terminal 30c, thereby exerting a force on the connection between the cap body 22 and the cannular body 21. If the cap body 22 and cannular body 21 are separate structures, for example, if the cap body 22 and the cannular body 21 are connected by welding, a connection failure may occur at the connection between the cap body 22 and the cannular body 21 under the action of force. The embodiments of the application integrate the cap body 22 and the cannular body 21 so as to improve the strength of the connection between the cap body 22 and the cannular body 21 and reduce the risk of connection failure between the cap body 22 and the cannular body 21.

In some embodiments, the housing 20 is neither electrically connected to the positive electrode of the electrode assembly 10 nor electrically connected to the negative electrode of the electrode assembly 10. In other words, the housing 20 is uncharged.

In some embodiments, the first and second electrode tabs of the electrode assembly 10 are located on the same side of the electrode assembly 10 facing towards the cap body 22.

In some embodiments, the first electrode terminal 30b may employ the electrode terminal as shown in Fig. 6, the electrode terminal as shown in Fig. 10, the electrode terminal as shown in Fig. 14, or other types of electrode terminals.

In some embodiments, the first electrode terminal 30b is electrically connected to the first electrode tab by the current collection member 40. The current collection member 40 for a square battery cell may also employ the current collection member as shown in Fig. 6, the current collection member as shown in Fig. 10, the current collection member as shown in Fig. 14, or other types of current collection members.

According to some embodiments of the application, the application further provides a battery including a plurality of battery cells according to any of the above embodiments.

According to some embodiments of the application, the application further provides an electric device including the battery according to any of the above embodiments used to provide electrical energy for the electric device. The electric device may be any apparatus or system employing the battery cell described above.

Referring to Figs. 4-9, an embodiment of the application provides a cylindrical battery cell 7 including an electrode assembly 10, a housing 20, an electrode terminal 30, a current collection member 40 and a cover plate 50.

The housing 20 includes a cannular body 21 and a cap body 22 which are integrally formed. The cannular body 21 is arranged to encircle an outer periphery of the electrode assembly 10, and the cap body 22 is provided with an electrode export hole 221. The electrode terminal 30 is mounted in the electrode export hole 221. The cannular body 21 has an opening at an end away from the cap body 22, and the cover plate 50 is capped at the opening of the cannular body 21 to close the opening of the cannular body 21.

The electrode assembly 10 includes a body portion 12, a first electrode tab 11 and a second electrode tab 13, and the first electrode tab 11 and the second electrode tab 13 protrude from the body portion 12. The first electrode tab 11 is located at an end of the electrode assembly 10 facing towards the electrode terminal 30, and the second electrode tab 13 is located at an end of the electrode assembly 10 away from the electrode terminal 30.

The electrode terminal 30 has an abutting surface 30a abutting with the current collection member 40. The abutting surface 30a is a circular plane. The diameter of the abutting surface 30a is D₁. The diameter of the current collection member 40 is D₂, and the minimum thickness of the current collection member 40 is t₁. D₁, D₂ and t₁ satisfy: t₁×D₁/D₂≤0.4.

The electrode terminal 30 includes a first recess 31 and a connection portion 32 located at the bottom of the first recess 31. The current collection member 40 is welded to the connection portion 32 and forms a first welding portion W1.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of the technical solutions in the various embodiments of the application.

## Claims

1. A battery cell, comprising:
a housing;
an electrode terminal disposed on the housing;
an electrode assembly accommodated in the housing, an end of the electrode assembly facing towards the electrode terminal being provided with a first electrode tab;
a current collection member connected to the first electrode tab, at least a part of the current collection member being located lateral to the electrode terminal towards the first electrode tab, abutting with and being connected to the electrode terminal.

2. The battery cell according to claim 1, wherein the current collection member abuts with and is connected to an end surface of the first electrode tab facing towards the electrode terminal.

3. The battery cell according to claim 1 or 2, wherein:
the electrode terminal has an abutting surface abutting with the current collection member, and a diameter of the abutting surface is D₁;
a diameter of the current collection member is D₂, and a minimum thickness of the current collection member is t₁;
D₁, D₂ and t₁ satisfy: t₁×D₁/D₂≤0.4.

4. The battery cell according to claim 3, wherein D₁, D₂ and t₁ satisfy: 0.05≤t₁×D₁/D₂≤0.3.

5. The battery cell according to claim 3 or 4, wherein t₁ is 0.1mm-1mm; optionally, t₁ is 0.2mm-0.6m.

6. The battery cell according to any one of claims 1-5, wherein in a thickness direction of the current collection member, a surface of the electrode terminal closest to the electrode assembly abuts with the current collection member.

7. The battery cell according to claim 6, wherein:
the electrode terminal comprises a limit portion and a first projection, and the limit portion is accommodated in the housing;
in the thickness direction of the current collection member, the limit portion overlaps at least partially with the housing, and a top end surface of the first projection is closer to the electrode assembly than the limit portion; and
the top end surface of the first projection abuts with the current collection member.

8. The battery cell according to claim 7, wherein in the thickness direction of the current collection member, a dimension t₂ of the first projection protruding from the limit portion is 0.05mm-0.35mm; optionally, t₂ is 0.15mm-0.25mm.

9. The battery cell according to claim 7 or 8, wherein a region of the electrode terminal corresponding to the top end surface of the first projection is welded to the current collection member and forms a first welding portion.

10. The battery cell according to claim 9, wherein the first welding portion is circular ring-shaped, an outer diameter of the first welding portion is D₃, a diameter of the top end surface of the first projection is D₄, and D₃ is less than D₄.

11. The battery cell according to claim 9 or 10, wherein the electrode terminal is provided with a first recess on a side away from the first electrode tab, a portion between a bottom surface of the first recess and the top end surface of the first projection forms a connection portion, and the connection portion is welded to the current collection member and forms the first welding portion.

12. The battery cell according to claim 11, wherein a diameter of the bottom surface of the first recess is D₅, a diameter of the top end surface of the first projection is D₄, and D₅ is less than D₄.

13. The battery cell according to any one of claims 7-12, wherein in the thickness direction of the current collection member, the entire first projection is closer to the electrode assembly than the limit portion.

14. The battery cell according to any one of claims 7-12, wherein:
the electrode terminal is provided with an annular recess on a side facing towards the electrode assembly, and the annular recess is arranged to encircle the first projection; and
the annular recess is recessed relative to a surface of the limit portion facing towards the electrode assembly, and separates at least a part of the limit portion from the first projection.

15. The battery cell according to any one of claims 7-14, wherein:
the current collection member is welded to the first electrode tab and forms a second welding portion; and
in the thickness direction of the current collection member, the second welding portion does not overlap with the top end surface of the first projection.

16. The battery cell according to claim 15, wherein at least a part of the second welding portion is located lateral to the electrode terminal towards the first electrode tab and is arranged to be spaced apart from the electrode terminal.

17. The battery cell according to any one of claims 7-16, wherein a diameter of the current collection member is D₂, a diameter of the top end surface of the first projection is D₄, and D₄/D₂≤0.4.

18. The battery cell according to any one of claims 1-17, wherein:
the current collection member comprises a current collection body and a second projection, the current collection body is connected to the first electrode tab, the second projection protrudes from a surface of the current collection body facing towards the electrode terminal, and a top end surface of the second projection abuts with the electrode terminal; and
the current collection body is arranged to be spaced apart from the electrode terminal.

19. The battery cell according to claim 18, wherein in the thickness direction of the current collection member, a dimension t₃ of the second projection protruding from the current collection body is 0.05mm-0.25mm; optionally, t₃ is 0.1mm-0.2mm.

20. The battery cell according to claim 18 or 19, wherein a region of the current collection body surrounding outside the second projection is welded to the first electrode tab.

21. The battery cell according to any one of claims 18-20, wherein a diameter of the current collection member is D₂, a diameter of the top end surface of the second projection is L, and L/D₂≤0.4.

22. The battery cell according to any one of claims 18-21, wherein the electrode terminal comprises a first projection, and a top end surface of the first projection abuts with the top end surface of the second projection.

23. The battery cell according to any one of claims 18-21, wherein:
the electrode terminal is provided with a second recess on a side facing towards the current collection member; and
at least a part of the second projection is accommodated in the second recess, and a top end surface of the second projection abuts with a bottom surface of the second recess.

24. The battery cell according to any one of claims 18-23, wherein the current collection member further comprises a third projection, and the third projection protrudes from a surface of the current collection body facing towards the first electrode tab.

25. The battery cell according to claim 24, wherein the third projection and the second projection are symmetrical with respect to the current collection body.

26. The battery cell according to any one of claims 18-23, wherein the current collection member is provided with a third recess at a position corresponding to the second projection, and the third recess is recessed relative to a surface of the current collection body facing towards the first electrode tab.

27. The battery cell according to any one of claims 1-26, wherein:
the electrode terminal is welded to the current collection member; and
a melting point of the electrode terminal is T₁, a melting point of the current collection member is T₂, and T₁/T₂ is 0.8-1.1.

28. The battery cell according to any one of claims 1-27, wherein:
the electrode terminal comprises a first recess and a connection portion located at a bottom of the first recess;
the current collection member is welded to the connection portion and forms a first welding portion; and
in the thickness direction of the current collection member, the first welding portion extends from a side of the connection portion away from the current collection member to at least an interior of the current collection member.

29. The battery cell according to claim 28, wherein:
the housing comprises a cannular body and a cap body connected to the cannular body, the cannular body is arranged to encircle an outer periphery of the electrode assembly, the cap body is provided with an electrode export hole, and the electrode terminal is mounted in the electrode export hole;
the first welding portion and the cap body are both circular ring-shaped, an outer diameter of the cap body is D₆, and an inner diameter of the first welding portion is D₇; and
D₆ and D₇ satisfy: 0.1≤D₇/D₆≤0.6.

30. The battery cell according to claim 29, wherein 0.2≤D₇/D₆≤0.4.

31. The battery cell according to claim 29 or 30, wherein D₇ is 5mm-14mm.

32. The battery cell according to any one of claims 29-31, wherein the cap body and the cannular body are of an integrally formed structure.

33. The battery cell according to any one of claims 28-32, wherein:
in the thickness direction of the current collection member, a dimension of the first welding portion is h, and a thickness of the connection portion is D₈; and
D₈ and h satisfy: 1<h/D₈≤1.5.

34. The battery cell according to claim 33, wherein a thickness of a region of the current collection member for being welded to the connection portion is D₉, and D₈ and D₉ satisfy: 0.5≤D₉/D₈≤1.2.

35. The battery cell according to claim 33 or 34, wherein D₈ is 0.4mm-1.2mm.

36. The battery cell according to any one of claims 1-35, wherein:
the current collection member is welded to the first electrode tab and forms a second welding portion;
the first electrode tab is arranged to encircle a central axis of the electrode assembly, and a cross section of the first electrode tab perpendicular to the central axis is circular ring-shaped; and
an outer radius of the first electrode tab is R, a minimum spacing between the second welding portion and the central axis in a radial direction of the first electrode tab is D₁₀, and D₁₀ and R satisfy: 0.2≤D₁₀/R≤0.8.

37. The battery cell according to claim 36, wherein D₁₀ and R satisfy: 0.2≤D₁₀/R≤0.5.

38. The battery cell according to claim 36 or 37, wherein D₁₀ is 3.5mm-10mm.

39. The battery cell according to any one of claims 1-38, wherein a diameter of the current collection member is D₂, a diameter of the first electrode tab is D₁₁, and D₂ is less than D₁₁.

40. The battery cell according to claim 39, wherein D₂ and D₁₁ satisfy: 0.75≤D₂/D₁₁≤0.97.

41. The battery cell according to claim 39 or 40, wherein D₂ is 35mm-44mm.

42. A battery, comprising the battery cell according to any one of claims 1-41.

43. An electric device, comprising the battery according to claim 42 used to provide electrical energy.
